(19) Europäisches Patentamt
European Patent Office
Office européen des brevets

(11) **EP 4 607 918 A1**

(12) **EUROPEAN PATENT APPLICATION**

(43) Date of publication:
**27.08.2025 Bulletin 2025/35**

(21) Application number: **24158999.3**

(22) Date of filing: **22.02.2024**

(51) International Patent Classification (IPC):
**H04N 9/68** (2023.01)    **H04N 5/20** (2006.01)
**G06T 5/92** (2024.01)

(52) Cooperative Patent Classification (CPC):
**H04N 9/68; G06T 5/92; H04N 5/20; H04N 19/85**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2024 EP 24158759**

(71) Applicant: **Koninklijke Philips N.V.
5656 AG Eindhoven (NL)**

(72) Inventor: **TICHELAAR, Johannes Yzebrand
Eindhoven (NL)**

(74) Representative: **Philips Intellectual Property &
Standards
High Tech Campus 52
5656 AG Eindhoven (NL)**

(54) **IMPROVED ENCODING AND DECODING FOR IMAGES**

(57) To obtain better color control in dynamic range mappings, which are e.g. useful in particular for HDR image coding and communication, the inventor proposes, for a corresponding innovative decoder, an encoder for encoding an original image (Im_MAST) of pixels, wherein a pixel has a primary brightness, wherein the original image is represented as a different communication image (Im_COMM) having for the pixel a secondary brightness, wherein the secondary brightness lies within a secondary range having a lower maximum brightnesses (ML_C) than an original maximum brightness (ML_V) of a primary range of the primary brightness, wherein the encoder comprises a first circuit (600) arranged to calculate an initial approximation of the secondary brightness (Y'_Ek_SDR) for a pixel being processed, the first circuit comprising:

a largest color component determining circuit (506) arranged to for the pixel determine which is the largest one of a red, green and blue color component representing a color of the pixel, and outputting such largest color component (LC_i);

a weight determination circuit (508) arranged to obtain a value of a control parameter (Ksi) and to calculate a first weight (A) by taking the minimum of the constant 1.0 and a result of a multiplication of the control parameter by a first intermediate value which is equal to the value of a second intermediate value minus 1.0,
wherein the second intermediate value equals a division of the largest color component by an input luma (Y'_i) of the pixel;
wherein the weight determination circuit is arranged to output the first weight and a second weight which is equal to 1.0 minus the first weight;
a first multiplier determination circuit (604) arranged to output a luma-dependent multiplier (gd(Y')) which depends on the value of the input luma;
a second multiplier determination circuit (607) arranged to output a largest component-dependent multiplier (gd(LC)) which depends on the value of the largest color component (LC_i);
a first multiplication circuit (510) arranged to obtain a weighted luma multiplier (gd_W) by multiplying the luma-dependent multiplier (gd(Y')) by the second weight (1-A);
a second multiplication circuit (511) arranged to obtain a weighted largest component multiplier (gd_LCW) by multiplying the largest component-dependent multiplier (gd(LC)) by the first weight (A);
an adder (512) arranged to add the weighted largest component multiplier (gd_LCW) to the weighted luma multiplier (gd_W) to obtain a final multiplier (gFe); and
a scaling multiplication circuit (513) to obtain the initial approximation of the secondary brightness (Y'_Ek_SDR) by multiplying the final multiplier (gFe) by the input luma (Y'_i);
wherein the image encoder comprises a second circuit (700) arranged to yield an improved accuracy second approximation of the secondary brightness (Y'_iko) on the basis of a difference (DEL) between the input luma and an estimate of the input luma derived by luminance up-mapping the initial approximation of the secondary brightness (Y'_Ek_SDR) with a reciprocal value of the final multiplier (gFe).

EP 4 607 918 A1

Fig. 6

**Description**

FIELD OF THE INVENTION

The invention relates to improved luminance dynamic range-adjustment savvy image coding, which allows changes between a first image having a first luminance dynamic and a second image of different second luminance dynamic range, whilst caring for good chromatic accuracy of the image pixel colors, which is in particular suitable for video communication systems such as television broadcast or video on demand.

BACKGROUND OF THE INVENTION

For more than half a century, an image representation/coding technology which is now called **Low Dynamic** Range **(LDR)** or **Standard Dynamic Range (SDR)** worked perfectly fine for creating, communicating and displaying electronic images such as videos (i.e. temporally successive sequences of images). Colorimetrically, i.e. regarding the specification of the pixel colors, it was based on the technology which already worked fine decades before for photographic materials and paintings: one merely needed to be able to define, and display, most of the colors projecting out of an axis of achromatic colors (a.k.a. greys) which spans from black at the bottom end to the brightest achromatic color giving the impression to the viewer of being white. For television communication, which relies on an additive color creation mechanism at the display side, a triplet of red, green and blue color components needed to be communicated for each position on the display screen (pixel), since with a suitably proportioned triplet (e.g. 60%, 30%, 25%) one can make almost all colors, and in practice all needed colors (white being obtained by driving the three display channels to their maximum, with driving signal Rmax=Gmax=Bmax).
The earliest television standards (NTSC, PAL) communicated the color components as three voltage signals (which defined the amount of a color component between 0 and 700mV), where the time positions along the voltage signal corresponded by using a scan path with pixels on the screen.
The control signals generated at the creation side, directly instructed what the display should make as proportion (apart from their being an accidental fixed gamma pre-correction at the transmitter, because the physics of the cathode ray tube took approximately a square power of the input voltage, which would have made the dark colors much blacker than they were intended e.g. as seen by a camera) at the creation side). So a 60%, 30%, 25% color (which is a dark red) in the scene being captured, would look substantially similar on the display, since it would be re-generated as a 60%, 30%, 25% color (note that the absolute brightness didn't matter much, since the eye of the viewer would adapt to the white and the average brightness of the colors being displayed on the screen). One can call this "direct link driving", without further color processing (except for arbitrary and unnecessary processing a display maker might still perform to e.g. make his sky look more blue-ish). For reasons of backwards compatibility with the older black and white television broadcasts, instead of actually communicating a red, green and blue voltage signal, a brightness signal and two color difference signals called chroma were transmitted (in current nomenclature the blue chroma Cb, and the red Cr). The relationship between RGB and YCbCr is an easy one, namely they can be calculated into each other by using a simple fixed 3x3 matrix (the coefficients of which depend on the emission spectra of the three primaries, and are standardized, i.e. also to be emulated electronically internally by LCDs which actually may have different optical characteristics, so that from image communication point of view all SDR displays are alike).
These voltage signals were later for digital television (MPEG-based et al.) digitized, as prescribed in standard Rec. 709, and one defined the various amounts of e.g. the brightness component with an 8 bit code word, 0 coding for the darkest color (i.e. black), and 255 for white. Note that coded video signals need not be compressed in all situations (although they oftentimes are). In case they are we will use the wording compression (e.g. by MPEG-HEVC, AV1 etc.), not to be confused with the act of compressing colors in a smaller gamut respectively range. With brightness we mean the part of the color definition that will impact upon the colors (to be, or when) displayed the visual property of being darker respectively brighter. In the light of the present technologies, it is important to correctly understand that there can be two kinds of brightnesses: relative brightness (as a percentage of something, which may be undefined until a choice is made, e.g. by the consumer buying a certain display, and setting its brightness setting to e.g. 120%, which will make e.g. the backlight emit a certain amount of light, and so also the white and colored pixels), and on the other hand absolute brightness. The latter can be characterized by the universal physical quantity luminance (which is measured technically in the unit nit, which is also candela per square meter). The luminance can be stated as an amount of photons coming out of a patch on an object, such as a pixel on the screen, towards the eye (and it is related to the lighting concept of illuminance, since such patch will receive a certain illuminance, and send some fraction of it towards the viewer).
Recently two unrelated technologies have emerged, which only came together because people argued that one might as well in one go improve the visual quality of images on all aspects, but those two technologies have quite different technical aspects.
On the one hand there was a strive towards wide gamut image technology. It can be shown that only colors can be made which lie within the triangle spanned by the red, green and blue primaries, and nothing outside. But one chose (EBU, also re-standardized in Rec. 709) primaries (originally phosphors for the CRT, later color filters in the LCD, etc.) which lay relatively close to the spectral locus of all existing colors, so one could make sufficiently saturated colors for most purposes. Saturation specifies how far away a color lies from the achromatic (colorless) colors, i.e. how much "color" there is. However, recently one wanted to be able to use novel displays with more saturated primaries (e.g. DCI_P3, or Rec. 2020), so that one also needed to be able to represent colors in such wider color spaces. A color space is the mathematical 3D space to represent colors (defining geometric positions of colors by coordinate numbers, e.g. a red, green and blue value of the weighed combination of primary intensities in the produced total color), often presented in such a shape that the base is defined by the triangle of 3 primaries. Color model refers to the election of the categories of numerical values one uses to define the space, e.g. red, green and blue being a natural representation for specifying additive color generators, yet the same colors can be defined by three other coordinate ranges in the Hue, Saturation, and Value model, which model characterizes the colors in a more human-related manner. For the technical discussion we may better use the word color gamut, which is the set of all colors that can be technically defined or displayed (i.e. a space may be e.g. a 3D coordinate system going to infinity whereas the gamut may be a cube or tent-shape of some size in that space). For the brightness aspect only, we will talk about brightness or luminance range (more commonly worded as "dynamic range", spanning from some minimum brightness to its maximum brightness). The present technologies will not primarily be about chromatic (i.e. color per se, such as more specifically its saturation) aspects, but rather about brightness aspects, so the chromatic aspects will only be mentioned to the extent needed for the relevant embodiments.

A more important new technology is **High Dynamic Range (HDR)**. This should not be construed as "exactly this high" (since there can be many variants of HDR representations, with successively higher range maximum), but rather as "higher than the reference/legacy representation: SDR". Since there are new coding concepts needed, one may also discriminate HDR from SDR by aspects from the technical details of the representation, e.g. the video signal. One difference of absolute HDR systems is that they define a unique luminance for each image pixel (e.g. a pixel in an image object being a white dog in the sun may be 550 nit), where SDR signals only had relative brightness definitions (so the dog would happen look e.g. 75 nit (corresponding to 94%) on somebody's computer monitor which could maximally show 80 nit, but it would display at 234 nit on a 250 nit SDR display (yet the viewer would not typically see any difference in the look of the image, unless having those displays side by side). I.e., whichever actual manner of coding the HDR image coder applies (e.g. as regards the format of the pixel color triplets, an RGB representation or alternatively a Y'CbCr representation), absolute HDR image or video coding allows the receiving side to state a definite luminance value for each pixel of the received image, whereas the relative systems cannot (when receiving relative images decoders can decide to display the pixel at some "arbitrary" luminance, but cannot decode an agreed luminance from the encoder). I.e. the reader should not confuse luminances as they exist (ultimately) at the front of any display, upon the act of displaying the image, with luminances as are defined (i.e. establishable) on an image signal itself, i.e. even when that is stored but not displayed. Other differences are metadata that any flavor of HDR signal may have, but not the SDR signal. I.e. the coding of the signal will also indicate differences with SDR. And, ultimately there would be a chain of all-HDR apparatuses: an apparatus (e.g. camera) for generating HDR (i.e. e.g. > 10,000: 1) images, an HDR video communication system, and an HDR end-user display to see the images (and anything additional in between, like e.g. grading software, should also be HDR-capable).

Colorimetrically, HDR images can represent brighter colors than SDR images, so in particular brighter than (Lambertian reflecting) white colors (glowing whites e.g.). Or in other words, the dynamic range will be larger. The SDR signal can represent a dynamic range of 1000: 1 (how much dynamic range is actual visible when displaying, will depend inter alia on the amount of surround light reflecting on the front of the display). Typically that SDR luminance range may display between (approximately) 0.1 nit minimum well-visible black and (approximately) 100 nit white (minor variations in displaying won't matter much to the viewer). An image as encoded and communicated will typically be at least as good or better than a typical viewing scenario demands.

Now if one wants to represent e.g. 10,000: 1, one must resort to making a new HDR image format definition (we may in general use the word signal if the image representation is being or to be communicated rather than e.g. merely existing in the creating IC, and in general signaling will also have its own formatting and packaging, and may employ further techniques depending on the communication mechanism such as modulation).

Depending on the situation, the human eye can easily see (even if all on a screen in front corresponding to a small glare angle) 100,000:1 (e.g. 10,000 nit maximum and 0.1 minimum, which is a good black for television home viewing, i.e. in a dim room which only support lighting of a relatively low level, such as in the evening). If a dynamic range is characterized only by a maximum luminance (ML), it is based on a fixed reference minimum black (MB) luminance, e.g. 0.1 nit. However, it is not necessary that all images as created by a creative go as high: (s)he may elect to make the brightest image pixel in an image or the video e.g. 1000 nit.

The luminance of SDR white for videos (a.k.a. the SDR White Point Luminance (WPL) or maximum luminance (ML)), is standardized to be 100 nit (not to be confused with the reference luminance of white text in 1000 nit HDR images being typically 200 nit, i.e. a Lambertian white level in typical HDR images). I.e., a 1000 nit ML HDR image representation can make up to 10x brighter (glowing) object colors than an absolute SDR image. What one can content-wise, i.e. image object-wise, make with this are e.g. specular reflections on metals, such as a boundary of a metal window frame: in SDR the luminance has to end at 100 nit, making them visually on slightly brighter than the e.g. 70 nit light gray colors of the part of the window frame that does not specularly reflect. In HDR one can make those pixels that reflect the light source to the eye e.g. 900 nit, making them glow nicely giving a naturalistic look to the image as if it were a real scene. The same can be done with fire balls, light bulbs of a Christmas decoration in a garden, etc. This regards the definition of images; how a display which can only display whites as bright as 650 nit (the display maximum luminance ML_D rather than the video or content maximum luminance ML_C) is to actually display the images is an entirely different matter, namely one of **display adaptation a.k.a. display tuning**, not a matter of image (de)coding. However, the display will usually try to display as close as possible to the ideal displaying as far as the display capabilities allow (e.g. darker pixel luminances of an image may be displayed equi-luminance i.e. with the luminances as coded in the received image). Also the relationship with how a camera captures HDR scene colors may be tight or loose: we will in general assume that HDR colors have already been defined in the HDR image when talking about such technologies as coding, communication, dynamic range conversion and the like. In fact, the original camera-captured colors or specifically their luminances may have been changed into different values by e.g. a human color grader (who defines the ultimate look of an image, i.e. which color triplet values each pixel color of the image(s) should have), or some automatic algorithm. In fact cameras normally don't even capture actual luminances, but linear brightness proportions. So we are talking about the coding of an HDR image grading, the brightnesses or luminances of that image, and the dynamic range of that image (per se, i.e. as it should ideally be displayed, on any display that has a capability to display the minimum and maximum luminance as prescribed in the image). If a color grader (human or automatic) considers in that image a 4000 nit sun disk pixel to be bright enough, it is for the majority of the technical discussions (apart from when they e.g. specifically deal with camera technologies) irrelevant what number the camera captured for the sun disk, let alone the original luminance of the sun in the captured scene. As regards the chromatic aspects, of wide gamut image technology, already for the fact that the chromatic gamut size may stretch with less than a factor 2, whereas the brightness range e.g. luminance range may stretch by a factor 100, one expects different technical rationales and solutions for the two improvement technologies. So we are mainly dealing with the height of the 3D gamut (or in a cube the diagonal distance from the zero vertex), on which vertical axis of achromatic greys we can locate the range of all luminances, e.g. all luminances codeable, or present in an image.

A HDR image may be associated with a metadatum called mastering display white point luminance (MDWPL), a.k.a. ML_V. This value, which is typically communicated in metadata of the signal, and is a characterizer of the HDR video images (rather than of a specific display, as it is an element of a virtual display associated specifically with the video, being some ideal intended display for which the video pixel colors have been optimized to be conforming). This is an electable parameter of the video, which can be contemplated as similar to the election of the painting canvas aspect ratio by a painter: first the painter chooses an appropriate AR, e.g. 4: 1 for painting a landscape, or 1: 1 when he wants to make a still life, and thereafter he starts to optimally position all his objects in that elected painting canvas. In an HDR image the creator will then, after having established that the MDWPL is e.g. 5000 nit, make his secondary elections that in a specific scene this lamp shade should be at 700 nit, the flames in the hearth distributed around 500 nit, etc.

The primary visual aspect of HDR images is (since the blacks are more tricky) the additional bright colors (so one can define ranges with only a MDWPL value, if one assumes the bottom luminance to be fixed to e.g. 0.1 nit). However, HDR image creation can also involve deeper blacks, up to as deep as e.g. 0.0001 nit (although that is mostly relevant for dark viewing environments, such as in cinema theatres).

The other objects, e.g. the objects which merely reflect the scene light, will be coordinated to be e.g. at least 40x darker in a 5000 nit MDWPL graded video, and e.g. at least 20x darker in a 2000 nit video, etc. So the distribution of all image pixel luminances will typically depend on the MDWPL value (not making most of the pixels very bright).

The digital coding of the brightness, involves a technical quantity called luma (Y). We will give luminances the letter L, and (relative) brightnesses the letter B. Note that technically, e.g. for ease of definition of some operations, one can always normalize even 5000 nit WPDPL range luminances to the normalized range [0,1], but that doesn't detract from the fact that these normalized luminances still represent absolute luminances on a range ending at 5000 nit (in contrast to relative brightnesses that never had any clear associated absolute luminance value, and can only be converted to luminances ad hoc, typically with some arbitrary value).

For SDR signals the luma coding used a so-called Opto-electronic Transfer Function (OETF), between the optical brightnesses and the electronic typically 8 bit luma codes which (approximately) by definition was:

$$Y\_float = sqrt\,(B\_relative).$$

If B_relative is a float number ranging from 0 to 1.0, so will Y_float.

Subsequently that signal value Y _float is quantized, because we want 8 bit digital representations, ergo, the Y_dig value that is communicated to receivers over e.g. airways DVB (or internet-supplied video on demand, or blu-ray disk, etc.) has a value between 0 and 255 (i.e. power(2;8)-1).

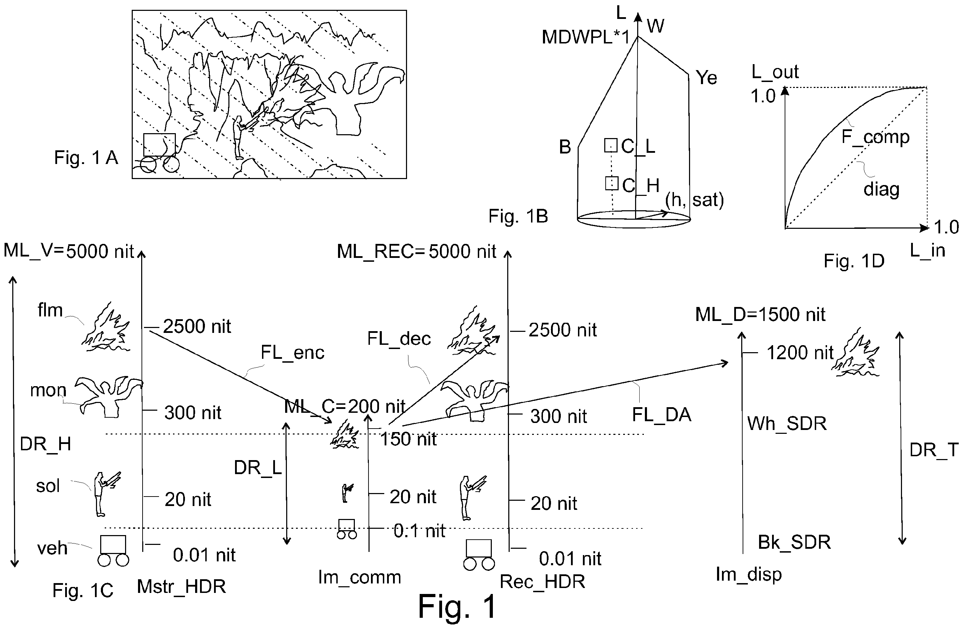

One can show the gamut of all SDR colors (or similarly one can show gamuts of HDR colors, which would if using the same RGB primaries defining the chromatic gamut have the same base, but after renormalization stretch vertically to a larger absolute gamut solid) as in **Fig. 1B**. Larger Cb and Cr values will lead to a (psychovisually more relevant color characterizer) larger saturation (sat), which moves outwards from the unsaturated or colorless colors vertical axis showing the achromatic colors in the middle, towards the maximally saturated colors on the circle (which is a transformation of the usual color triangle spanned by the RGB primaries as vertices). Hues h (i.e. the color category, yellows, versus greens, versus blues) will be angles along the circle. The vertical axis represents normalized luminances (in a linear gamut representation), or normalized lumas (in a non-linear representation (coding) of those luminances, e.g via a psychovisually uniformized OETF or its inverse the EOTF). Since after normalization (i.e. division by the respective MDWPL values, e.g. 2000 for an HDR image of a particular video and 100 for an SDR image), the common representation will become easy, and one can define luminance (or luma) mapping functions on normalized axes as shown in **Fig. 1D** (i.e. which function F_comp re-distributes the various image object pixel values as needed, so that in the actual luminance representation e.g. a dark object looks the same, i.e. has the same luminance, but a different normalized luminance since in one situation a pixel normalized luminance will get multiplied by 100 and in the other situation by 2000, so to get the same end luminance the latter pixel should have a normalized luminance of 1/20$^{th}$ of the former). When down-grading to a smaller range of luminances, one will typically get (in the normalized to 1.0 representation, i.e. mapping a range of normalized input luminances L_in between zero and one to normalized output luminances L out) a convex function which everywhere lies above the diagonal diag, but the exact shape of that function F_comp, e.g. how fact it has to rise at the blacks, will depend typically not only on the two MDWPL values, but (to have the most perfect re-grading technology version) also on the scene contents of various (video or still) images, e.g. whether the scene is a dark cave, and there is action happening in a shadowy area, which must still be reasonably visible even on 100 nit luminance ranges (hence the strong boost of the blacks for such a scenario, compared to a daylight scene which may employ a near linear function almost overlapping with the diagonal).

In the representation of Fig. 1B one can show the mapping from a HDR color (C_H) to an LDR color (C_L) of a pixel as a vertical shift (assuming that both colors should have the same proper color, i.e. hue and saturation, which usually is the desired technical requirement, i.e. on the circular ground plane they will project to the same point). Ye means the color yellow, and its complementary color on the opposite side of the achromatic axis of luminances (or lumas) is blue (B), and W signifies white (the brightest color in the gamut a.k.a. the white point of the gamut, with the darkest colors, the blacks being at the bottom).

So the receiving side (in the old days, or today) will know it has an SDR video, if it gets this format. The maximum white (of SDR) will be by definition the brightest color that SDR can define. So if one now wants to make brighter image colors (e.g of real luminous lamps), that should be done with a different codec (as one can show the math of the Rec. 709 OETF allows only a coding of up to 1000: 1 and no more).

So one defined new frameworks with different code allocation functions (EOTFs, or OETFs). What is of interest here is primarily the definition of the luma codes.

For reasons beyond what is needed for the present discussion, most HDR codecs start by defining an Electro-optical transfer function instead of its inverse, the OETF. Then one can at least basically define brighter (and darker) colors. That as such is not enough for a professional HDR coding system, since because it is different from SDR, and there are even various flavors, one wants more (new compared to SDR coding) technical information relating to the HDR images, which will be metadata.

The property of those HDR EOTFs is that they are much steeper, to encode a much larger range of needed to be coded HDR luminances, and a significant part of that range coding specifically darker colors (relatively darker, since although one may be coding absolute luminances with e.g. the Perceptual Quantizer (PQ) EOTF (standardized in SMPTE 2084), one applies the function after normalization). In fact if one were to use exact power functions as EOTFs for coding HDR luminances as HDR lumas, one would have a power of 4, or even 7. When a receiver gets a video image signal defined by such an EOTF (e.g. Perceptual Quantizer) it will know it gets a HDR video. It will need the EOTF to be able to decode the pixel lumas in the plane of lumas spanning the image (i.e. having a width of e.g. 4000 pixels and a height of 2000), which will simply be binary numbers. Typically HDR images will also have a larger word length, e.g. 10 bit. However, one should not confuse the non-linear coding one can at will design by optimizing a non-linear EOTF shape with linear codings and the amount of bits needed for them. If one needs to drive, with a linear (bit-represented) code, e.g. a DMD pixel, indeed to reach e.g. 10000: 1 modulation darkest to brightest, one needs to take the log2 to obtain the number of bits. There one would need to have at least 14 bits (which may for technical reasons get rounded upwards to 16 bits), since power(2;14)= 16384 > 10000. But being able to smartly design the shape of the EOTF, and knowing that the visual system sees not all luminance differences equally, the present applicant has shown that (surprisingly) quite reasonable HDR television signals can be communicated with only 8 bit per pixel color component (of course if technically achievable in a system, 10 bits may be better and more preferable). So the receiving side may in both situations get as input a coded pixel color (luma and Cb, Cr; or in some systems by matrixing equivalent non-linear R'G'B' component values) which lie between 0 and 255, or 0 and 1023, but it will know the kind of signal it is getting (hence what ought to be displayed) from the metadata, such as the metadata (e.g. MPEG VUI metadata) co-communicated EOTF (e.g. a value 16 meaning PQ; 18 means another OETF was used to create the lumas, namely the Hybrid LogGamma OETF, ergo the inverse of that function should be used to decode the luma plane), in many HDR codings the MDWPL value (e.g. 2000 nit), and in more advanced HDR codings further metadata (some may e.g. co-encode luminance -or luma- mapping functions to apply for mapping image luminances from a primary luminance dynamic range to a secondary luminance dynamic range, such as one function FL_enc per image).

We detail the typical needs of an already more sophisticated HDR image handling chain with the aid of simple elucidation **Fig. 1** (for a typical nice HDR scene image, of a monster being fought in a cave with a flame thrower, the **master grading** (Mstr _HDR) of which is shown spatially in Fig. 1A, and the range of occurring pixel luminances on the left of Fig. 1C). The master grading or master graded image is where the image creator can make his image look as impressive (e.g. realistic) as desired. E.g., in a Christmas movie he can make a baker's shop window look somewhat illuminated by making the yellow walls somewhat brighter than paper white, e.g. 150 nit (and real colorful yellow instead of pale yellow), and the light bulbs can be made 900 nit (which will give a really lit Christmas-like look to the image, instead of a dull one in which all lights are clipped white, and not much more bright than the rest of the image objects, such as the green of the Christmas tree).

So the basic thing one must be able to do is encode (and typically also decode and display) brighter image objects than in a typical SDR image.

Let's look at it colorimetrically now. SDR (and its coding and signaling) was designed to be able to communicate any Lambertian reflecting color (i.e. a typical object, like your blue jeans pants, which absorbs some of the infalling light, e.g. the red and green wavelengths, to emit only blue light to the viewer or capturing camera) under good uniform lighting (of the scene where the action is camera-captured). Just like we would do on a painting: if we don't add paint we get the full brightness reflecting back from the white painting canvas, and if we add a thick layer of strongly absorbing paint we will see a black stroke or dot. We can represent all colors brighter than blackest black and darker than white in a so-called color gamut of representable colors, as in Fig. 1B (the "tent"). As a bottom plane, we have a circle of all representable chromaticities (note that one can have long discussions that in a typical RGB system this should be a triangle, but those details are beyond the needs of the present teachings). A chromaticity is composed of a certain (rotation angle) hue h (e.g. bluish-green e.g. "teal"), and a saturation sat, which is the amount of pure color mixed in a grey, e.g. the distance from the vertical axis in the middle which represents all achromatic colors from black at the bottom becoming increasingly bright till we arrive at white. Chromatic colors, e.g. a half-saturated purple, can also have a brightness, the same color being somewhat darker or brighter. However, the brightest color in an additive system can only be (colorless) white, since it is made by setting all color channels to maximum R=G=B=255, ergo, there is no unbalance which would make the color clearly red (there is still a little bit of bluishness respectively yellowishness in the elected white point chromaticity, but that is also an unnecessary further discussion, we will assume D65 daylight white). We can define those SDR colors by setting MDWPL a (relative) 100% for white W (n.b., in legacy SDR white does not actually have a luminance, since legacy SDR does not have a luminance associated with the image, but we can pretend it to be X nit, e.g. typically 100 nit, which is good average representative value of the various legacy SDR tv's).

Now we want to represent brighter than Lambertian colors, e.g. the self-luminous flame object (flm) of the flame thrower of the soldier (sol) fighting the monster (mon) in this dark cave.

Let's say we define a (video maximum luminance ML_V) 5000 nit master HDR grading (master means the starting image -most important in this case best quality grading- which we will optimally grade first, to define the look of this HDR scene image, and from which we can derive secondary gradings a.k.a. graded images as needed). We will for simplicity talk about what happens to (universal) luminances, then we can for now leave the debate about the corresponding luma codes out of the discussion, and indeed PQ can code between 1/10,000 nit and 10,000 nit, so there is no problem communicating those graded pixel luminances as a e.g. 10 bit per component YCbCr pixelized HDR image, if coding according to that PQ EOTF (of course, the mappings can also be represented, and e.g. implemented in the processing IC units, as an equivalent luma mapping).

The two dotted horizontal lines represent the limitations of the SDR codable image, when associating 100 nit with the 100% of SDR white.

Although in a cave, the monster will be strongly illuminated by the light of the flames, so we will give it an (average) luminance of 300 nit (with some spread, due to the square power law of light dimming, skin texture, etc.).

The soldier may be 20 nit, since that is a nicely slightly dark value, still giving some good basic visibility.

A vehicle (veh) may be hidden in some shadowy corner, and therefore in an archetypical good impact HDR scene of a cave e.g. have a luminance of 0.01 nit. The flames one may want to make impressively bright (though not too exaggerated). On an available 5000 nit HDR range, we could elect 2500 nit, around which we could still gradually make some darker and brighter parts, but all nicely colorful (yellow and maybe some oranges).

What would now happen in a typical SDR representation, e.g. a straight from camera SDR image capturing?

The camera operator would open his iris so that the soldier comes out at "20 nit", or in fact more precisely 20%. Since the flames are much brighter (note: we didn't actually show the real world scene luminances, since master HDR video Mstr_HDR is already an optimal grading to have best impact in a typical living room viewing scenario, but also in the real world the flames would be quite brighter than the soldier, and certainly the vehicle), they would all clip to maximum white. So we would see a bright area, without any details, and also not yellow, since yellow must have a lower luminance (of course the cinematographer may optimize things so that there is still somewhat of a flame visible even in LDR, but then that is firstly never as impactful extra bright, and secondly at the detriment of the other objects which must become darker).

The same would also happen if we built an SDR (max. 100 nit) TV which would map equi-luminance, i.e. it would accurately represent all luminances of the master HDR grading it can represent, but clip all brighter object to 100 nit white.

So the usual paradigm in the LDR era was to relatively map, i.e. the brightest brightness (here luminance) of the received image to the maximum capability of the display. So as this maps 5000 nit by division by 50 on 100 nit, the flames would still be okay since they are spread as yellows and oranges around 50 nit (which is a brightness representable for a yellow, since as we see in Fig. 1B the gamut tent for yellows goes down in luminance only a little bit when going towards the most saturated yellows, in contrast to blues (B) on the other side of the slice for this hue angle B-Ye, which blues can only be made in relatively dark versions). However, this would be at the detriment of everything else becoming quite dark, e.g. the soldier 20/50 nit which is pure black (and this is typically a problem that we see in SDR renderings of such kinds of movie scene).

So, if having established a good HDR maximum luminance (i.e. ML_V) for the master grading, and a good EOTF e.g. PQ for coding it, we can in principle start communicating HDR images to receivers, e.g. consumer television displays, computers, cinema projectors, etc.

But that is only the most basic system of HDR.

The problem is that, unless the receiving side has a display which can display pixels at least as bright as 5000 nit, there is still a question of how to display those pixels.

Some (DR adaptation) luminance down-mapping must be performed in the TV, to make darker pixels which are displayable. E.g. if the display has a (end-user) **display maximum luminance ML_D** of 1500 nit, one could somehow try to calculate 1200 nit yellow pixels for the flame (potentially with errors, like some discoloration, e.g. changing the oranges into yellows).

This luminance down-mapping is not really an easy task, especially to do very accurately instead of sufficiently well, and therefore various technologies have been invented (also for the not necessarily similar task of luminance up-mapping, to create an output image of larger dynamic range and in particular maximum luminance than the input image).

Typically one wants a mapping function (generically, i.e. used for simplicity of elucidation) of a convex shape in a normalized luminance (or brightness) plot, as shown in Fig. 1D. Both input and output luminances are defined here on a range normalized to a maximum equaling one, but one must mind that on the input axis this one corresponds to e.g. 5000 nit, and on the output axis e.g. 200 nit (which to and fro can be easily implemented by division respectfully multiplication). In such a normalized representation the darkest colors will typically be too dark for the grading with the lower dynamic range of the two images (here for down-conversion shown on the vertical output axis, of normalized output luminances L_out, the horizontal axis showing all possible normalized input luminances L_in). Ergo, to have a satisfactory output image corresponding to the input image, we must relatively boost those darkest luminances, e.g. by multiplying by 3x, which is the slope of this luminance compression function F_comp for its darkest end. But one cannot boost forever if one wants no colors to be clipped to maximum output, ergo, the curve must get an increasingly lower slope for brighter input luminances, e.g. it may typically map input 1.0 to output 1.0. In any case the luminance compression function F_comp for down-grading will lie above the 45 degree diagonal (diag) typically.

Care must still be taken to do this correctly. E.g., some people like to apply three such compressive functions to the three red, green and blue color channels separately. Whilst this is a nice and easy guarantee that all colors will fit in the output gamut (an RGB cube, which in chromaticity-luminance (L) view becomes the tent of Fig. 1B) especially with higher non-linearities it can lead to significant color errors. A e.g. reddish orange hue is determined by the percentage of red and green, e.g. 30% green and 70% red. If the 30% now gets doubled by the mapping function, but the red stays in the feeble-sloped part of the mapping function almost unchanged, we will have a 60/70, i.e. 50/50 i.e. a yellow instead of an orange. This can be particularly annoying if it depends on (in contrast to the SDR paradigm) non-uniform scene lighting, e.g. a sports car entering the shadows suddenly turning yellow.

Ergo, whilst the general desired shape for the brightening of the colors may still be the function F_comp (e.g. determined by the video creator, when grading a secondary image corresponding to his master HDR image already optimally graded), one wants a more savvy down-mapping. As shown in Fig. 1B, for many scenarios one may desire a re-grading which merely changes the brightness of the normalized luminance component (L), but now the innate type of color, i.e. its chromaticity (hue and saturation). If both SDR and HDR are represented with the same red, green and blue color primaries, they will have a similarly shaped gamut tent, only one being higher than the other in absolute luminance representation. If one scales both gamuts with their respective MDWPL values (e.g. MDWPL1= 100 nit, and MDWPL2= 5000 nit), both gamuts will exactly overlap. The desired mapping from a HDR color C_H to a corresponding output SDR color CL (or vice versa) will simply be a vertical shifting, whilst the projection to the chromaticity plane circle stays the same.

Although the details of such approaches are also beyond the need of the present application, we have thought examples of such color mapping mechanism before, where the three color components are processed coordinately, although in a separate luminance and chroma processing path, e.g. in WO2017157977.

If it is now possible to down-grade with one (or more) luminance mapping functions (the shape of which may be optimized by the creator of the video(s)), in case one uses invertible functions one can design a more advanced HDR codec.

Instead of just making some final secondary grading from the master image, e.g. in a television, one can make a lower dynamic range image version for communication, **communication image Im_comm**. We have elected in the example this image to be defined with its communication image maximum luminance ML_C equal to 200 nit. The original 5000 nit image can then be reconstructed (a.k.a. decoded) as a reconstructed image Rec_HDR (i.e. with the same reconstructed image maximum luminance ML_REC) by receivers, if they receive in metadata the decoding luminance mapping function FL_dec, which is typically substantially the inverse of the coding luminance mapping function FL_enc, which was used by the encoder to map all pixel luminances of the master HDR image into corresponding lower pixel luminances of the communication image Im_comm. So the proxy image for actually communicating an image of a higher dynamic range (DR_H, e.g. spanning from 0.001 nit to 5000 nit) is an image of a different, lower dynamic range (DR_L).

Interestingly, one can even elect the communication image to be a 100 nit LDR (i.e. SDR) image, which is immediately ready (without further color processing) to be displayed on legacy LDR images (which is a great advantage, because legacy displays don't have HDR knowledge on board). How does that work? The legacy TV doesn't recognize the MDWPL metadatum (cos that didn't exist in the SDR video standard, so the TV is also not arranged to go look for it somewhere in the signal, e.g. in a Supplemental Enhancement Information message, which is MPEG's mechanism to introduce all kinds of pre-agreed new technical information). It is also not going to look for the function. It just looks at the YCbCr e.g. 1920x1080 pixel color array, and displays those colors as usual, i.e. according to the SDR Rec. 709 interpretation. And the creator has chosen in this particular codec embodiment his FL_enc function so that all colors, even the flame, map to reasonable colors on the limited SDR range. Note that, in contrast to a simple multiplicative change corresponding to the opening or shutting of a camera iris in an SDR production (which typically leads to clipping to at least one of white and/or black), now a very complicated optimal function shape can be elected, as long as it is invertible (e.g. we have taught systems with first a coarse pre-grading and then a fine-grading). E.g. one can move the luminance (respectively relative brightness) of the car to a level which is just barely visible in SDR, e.g. 1% deep black, whilst moving the flame to e.g. 90% (as long as everything stays invertible). That may seem extremely daunting if not impossible at first sight, but many field tests with all kinds of video material and usage scenarios have shown that it is possible in practice, as long as one does it correctly (following e.g. the principles of WO2017157977).

How do we now know that this is actually a HDR video signal, even if it contains an LDR-usable pixel color image, or in fact that any HDR-capable receiver can reconstruct it to HDR: because there are also the functions FL_dec in metadata, typically one per image. And hence that signal codes what is also colorimetrically, i.e. according to our above discussion and definition, a (5000 nit) HDR image.

Although already more complex than the basic system which communicates only a PQ-HDR image, this per SDR proxy coding is still not the best future-proof system, as it still leaves the receiving side to guess how to down-map the colors if it has e.g. a 1500 nit, or even a 550 nit, tv.

Therefore we added a further technical insight, and developed so-called display tuning technology (a.k.a. display adaptation): the image can be tuned for any possible connected tv, i.e. any ML_D, because one can double the function of the coding function FL_enc as some guidance function for the up-mapping from 100 nit Im_comm not to a 5000 nit reconstructed image, but to e.g. a 1500 nit image. The concave function, which is substantially the inverse of F_comp (note, for display tuning there is no requirement of exact inversion as there is for reconstruction), will now have to be scaled to be somewhat less steep (i.e. from the reference decoding function FL_dec a display adapted luminance mapping function FL_DA will be calculated), since we expand to only 1500 nit instead of 5000 nit. I.e. an image of tertiary dynamic range (DR_T) can be calculated, e.g. optimized for a particular display in that the maximum luminance of that tertiary dynamic range is typically the same as the maximum displayable luminance of a particular display.

Techniques for this are described in WO2017108906 (we can transform a function of any shape into a similarly-shaped function which lies closer to the 45 degree diagonal, by an amount which depends on the ratio between the maximum luminances of the input image and the desired output image, versus the ratio of the maximum luminances of the input image and a reference image which would here be the reconstructed image, by e.g. using that ratio to obtain closer points on for all points on the diagonal orthogonally projecting a line segment from the respective diagonal point till it meets a point on the input function, which closer points together define the tuned output function, for calculating the to be displayed image Im_disp luminances from the Im_comm luminances).

Not only did we get more kinds of displays even for basic movie or television video content (LCD tv, mobile phone, home cinema projector, professional movie theatre digital projector), and more video different sources and communication media (satellite, streaming over the internet, e.g. OTT, streaming over 5G), but also did we get more production manners of video.

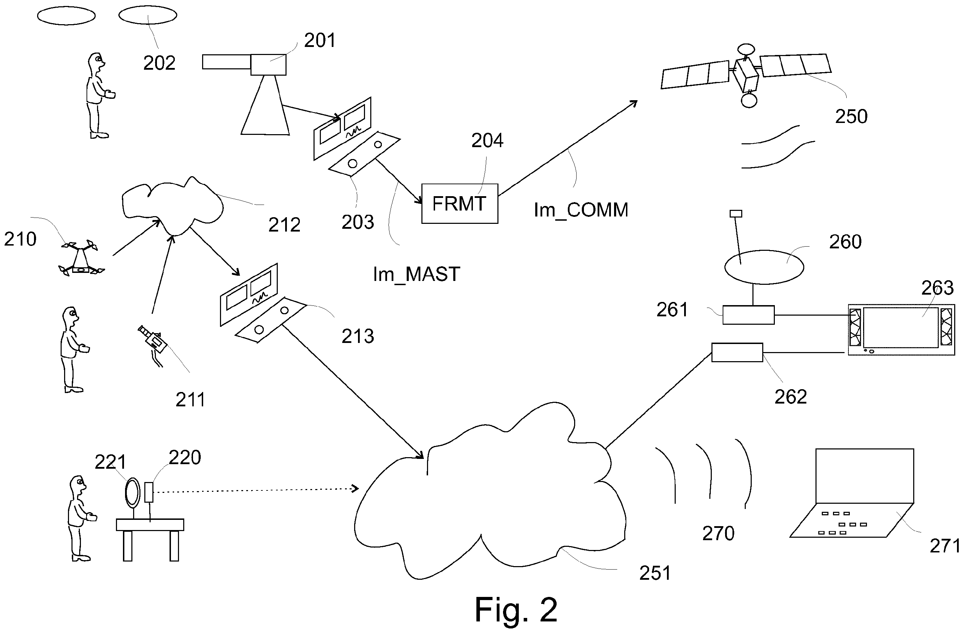

**Fig. 2** shows -in general, without desiring to be limiting- a few typical creations of video where the present teachings may be usefully deployed.

In a studio environment, e.g. for the news or a comedy, there may still be a tightly controlled shooting environment (although HDR allows relaxation of this, and shooting in real environments). There will be controlled lighting (202), e.g. a battery of base lights on the ceiling, and various spot lights. There will be a number of bulky relatively stationary television cameras (201). Variations on this often real-time broadcast will be e.g. a sports show like soccer, which will have various types of cameras like near-the-goal cameras for a local view, overview cameras, drones, etc.

There will be some production environment 203, in which the various feeds from the cameras can be selected to become the final feed, and various (typically simple, but potentially more complex) grading decisions can be taken. In the past this often happened in e.g. a production truck, which had many displays and various operators, but with internet-based workflows, where the raw feeds can travel via some network, the final composition may happen at the premises of the broadcaster. Finally, when simplifying the production for this elucidation, some coding and formatting for broadcast distribution to end (or intermediate, such as local cable stations) customers will happen in formatter 204. This will typically do the conversion to e.g. PQ YCbCr from the luminances as graded as explained with Fig. 1, for e.g. an intermediate dynamic range format, calculate and format all the needed metadata, convert to some broadcasting format like DVB or ATSC, packetize in chunks for distribution, etc. (the etc. indicating there may be tables added for signaling available content, sub-titling, encryption, but at least some of that will be of lesser interest to understand the details of the present technical innovations).

Typically, there will be a final product image (e.g. correctly brightness and color graded, for consumption in typical viewing scenarios), which is the master image Im_MAST. It may be that this master image itself is sent to any receiver, e.g. an end-consumer television display. But oftentimes colorimetrically and/or as regards signal format or definition, a different representative image or video is sent, the communication image Im_COMM. E.g. some backwards compatible systems, for broadcasters which still have many customers with legacy SDR televisions, may calculate an SDR proxy communication image(s) representing the master HDR image(s). These images will then be associatable with, usually co-communicated, brightness mapping function metadata, so that the receiving side can create higher dynamic range images again, e.g. reconstruct a close approximation (except for e.g. some minor quantization or compression artefacts) of the original master images.

In the example the video (a television broadcast in the example) is communicated via a television satellite 250 to a satellite dish 260 and a satellite signal capable set-top-box 261. Finally it will be displayed on an end-user display 263.

This display may be showing this first video, but it may also show other video feed, potentially even at the same time, e.g. in Picture-in-Picture windows (or some data of the first HDR video program may come via some distribution mechanism and other data via another).

A second production is typically an off-line production. We can think of a Hollywood movie, but it can also be a show of somebody having a race through a jungle. Such a production may be shot with other optimal cameras, e.g. steadicam 211 and drone 210. We again assume that the camera feeds (which may be raw, or already converted to some HDR production format like HLG) are stored somewhere on network 212, for later processing. In such a production we may in the last months of production have some human color grader use grading equipment 213 to determine the optimal luminances (or relative brightnesses in case of HLG production and coding) of the master grading. Then the video may be uploaded to some internet-based video service 251. For professional video distribution this may be e.g. Netflix.

A third example is consumer video production. Here the user will have e.g. when making a vlog a ring lighter 221, and will capture via a mobile phone 220, but (s)he may also be capturing in some exterior location without supplementary lighting. She/he will typically also upload to the internet, but now maybe to youtube, or tiktok, etc.

In case of reception via the internet, the display 263 will be connected via a modem, or router 262 or the like (more complicated setups like in-house wifi and the like are not shown in this mere elucidation).

Another user may be viewing the video content on a portable display (271), such as a laptop (or similarly other users may use a non-portable desktop PC), or a mobile phone etc. They may access the content over a wireless connection (270), such as Wifi, 5G, etc.

Current professional reference displays for viewing created video can go as high as ML_D = 10,000 nit. Even in the consumer arena, recently a 10,000 nit television has been demonstrated. So, if things evolve beneficially, we may see high quality HDR imagery being commonplace in various applications on not too long term. Note that cameras don't actually capture exact luminances, but rather relative brightnesses of a scene (due to the arbitrary selection of iris etc.), however, they have no problem capturing high dynamic ranges nowadays. Even standard cameras can at least faithfully capture 14 powers of two of differential brightness in a scene, and more advanced cameras with specialized sensor construction, or techniques such as multiple exposure can go well beyond this (e.g. 20 powers of two, which is a quite reasonable capturing dynamic range for most situations).

So it can be seen that today, various kinds of video, in various technical codings, can be generated and communicated in various manners, and our coding and processing systems have been designed to handle substantially all those variants.

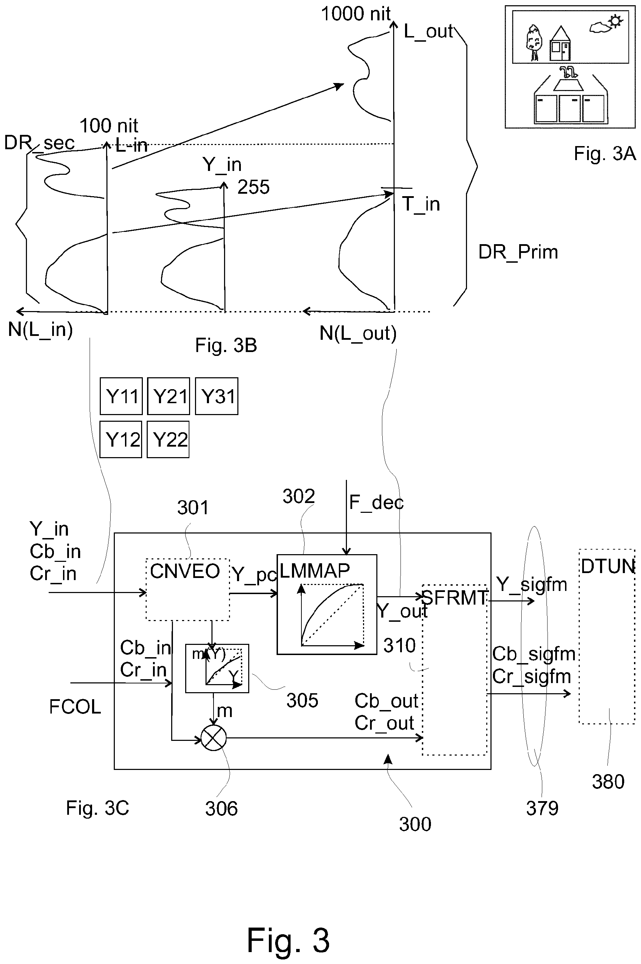

**Fig. 3** shows an example of an absolute (nit-level-defined) dynamic range conversion circuit 300 for a (HDR) image or video decoder downgrading from a higher dynamic range video input (when the communicated proxy image is a lower dynamic range image, the encoder will typically work similarly but with inverted functions typically, i.e. the function to be applied being the function of the other side mirrored over the diagonal). This is shown in a larger video processing chain in Fig. 3C, which also may contain further luminance range optimization (circuit 380). It is based on coding a primary image (e.g. a master HDR grading) with a primary luminance dynamic range (DR_Prim) as another (so-called proxy) image with a different secondary range of pixel luminances (DR_Sec). If the encoder and all its supply-able decoders have pre-agreed or know that the proxy image has a maximum luminance of 100 nit, this need not be communicated as an SDR_WPL metadatum. If the proxy image is e.g. a 200 nit maximum image, this will be indicated by filling its proxy white point luminance P_WPL with the value 200, or similarly for 80 nit etc. The maximum of the primary image (HDR_WPL= 1000), to be reconstructed by the dynamic range conversion circuit, will normally be co-communicated as metadata of the received input image, or video signal, i.e. together with the input pixel color triplets (Y_in, Cb_in, Cr_in). The various pixel lumas will typically come in as a luma image plane, i.e. the sequential pixels will have first luma Y11, second Y21, etc. (typically these will be scanned, and the dynamic range conversion circuit will convert pixel by pixel to output pixel color triplets (Y_out, Cb_out, Cr_out). We will primarily focus on the brightness dimension of the pixel colors in this elucidation. Various dynamic range conversion circuits may internally work differently, to achieve basically the same thing: a correctly reconstructed output luminance L_out for all image pixels (the actual details don't matter for this innovation, and the embodiments will focus on teaching only aspects as far as needed).

The mapping of luminances from the secondary dynamic range to the primary dynamic range may happen on the luminances themselves, but also on any luma representation (i.e. according to any EOTF, or OETF), provided it is done correctly, e.g. not separately on non-linear R'G'B' components. The internal luma representation need not even be the one of the input (i.e. of Y_in), or for that manner of whatever output the dynamic range conversion circuitry or its encompassing decoder may deliver (e.g. a format luma Y_sigfm for a particular communication format or communication system, "communicating" including storage to a memory, e.g. inside a PC, a hard disk, an optical storage medium, etc.).

We have optionally (dotted) shown a luma conversion circuit 301, which turns the input lumas Y_in into perceptually uniformized lumas Y_pc.

Applicant standardized in ETSI 103433 a useful equation to convert luminances in any range to such a perceptual luma representation:

$$Y\_pc = \log\_10\{1 + [RHO(WPL\_inrep) - 1] * power(Ln\_in; 1/(2.4))\}/\log\_10\{RHO(WPL\_inrep)\}$$

$$[Eq.\ 1]$$

In which the function RHO is defined as:

$$RHO(WPL\_inrep) = 1 + 32 * power\{(WPL\_inrep/10000); 1/(2.4)\} \quad [Eq.\ 2]$$

The value WPL_inrep is the maximum luminance of the range that needs to be converted to psychovisually uniformized lumas, so for the 100 nit SDR image this value would be 100, and for the to be reconstructed output image (or the originally coded image at the creation side) the value would be 1000.

Ln_in are the luminances along that whichever range which need to be converted, after normalization by dividing by its respective maximum luminance, i.e. within range [0,1].

Once we have an input and an output range normalized to 1.0, we can apply a luminance mapping function actually in the luma domain, as shown inside the luma mapping circuit 302, which does the actual luma mapping for each incoming pixel.

(note that the exact shapes of the function (once being determined as a desired well working function for the luminance contents of objects in any particular HDR scene image) depends on the one hand which respective maximum luminance ML has been used for the normalization, and on the other hand which EOTF or OETF was elected for representing luminances as lumas, e.g. perceptually uniform lumas, but the essence of the story, and the technical components, in general stays the same; at least in the systems of applicant which can handle various technical formats or desiderata; the skilled person should have no trouble changing the locus of points on a luminance mapping curve in one representation, say normalized linear luminances, to corresponding point on a re-shaped curve if one or both of the coordinate axis change to a fixed re-definition, e.g. Y_p=OETF(L_lin)).

In fact, this mapping function had been specifically chosen by the encoder of the image (at least for yielding good quality reconstructability, and maybe also a reduced amount of needed bits when MPEG compressing, but sometimes also fulfilling further criteria like e.g. the SDR proxy image being of correct luminance distribution for the particular scene -a dark cave, or a daytime explosion- on a legacy SDR display, etc.). So this function F_dec (or its inverse) will be extracted from metadata of the input image signal or representation, and supplied to the dynamic range conversion circuit for doing the actual per pixel luma mapping. In this example the function F_dec directly specifies the needed mapping in the perceptual luma domain, but other variants are of course possible, as the various conversions can also be applied on the functions. Furthermore, although for simplicity of explanation, and to guarantee the teaching is understood, we teach here a pure decoder dynamic range conversion, but other dynamic range conversions may use other functions, e.g. a function derived from F_dec, etc. The details of all of that are not needed for understanding the present innovative contribution to the technology.

In general one will not only change the luminances, but there will be a corresponding change in the chromas Cb and Cr. That can also be done in various manners, from strictly inversely decoding, to implementing additional features like a saturation boost, since Cb and Cr code the saturation of the pixels. Thereto another function is typically communicated in metadata (recoloring specification function FCOL), which determines the chromatic recoloring behavior, i.e. the mapping of Cb and Cr (note that Cb and Cr will typically be changed by the same multiplicative amount, since the ratio of Cr/Cb determines the hue, and generally one does not want to have hue changes when decoding, i.e. the lower and higher dynamic range image will in general have object pixels of different brightness, and oftentimes at least some of the pixels will have different saturation, but ideally the hue of the pixels in both image versions will be the same). This color function will typically specify a multiplier which has a value dependent on a brightness code Y (e.g. the Y_pc, or other codes in other variants). A multiplier establishment circuit 305 will yield the correct multiplier m for the brightness situation of the pixel being processed. A multiplier 306 will multiply both Cb_in and Cr_in by this same multiplier, to obtain the corresponding output chromas Cb_out= m*Cb_in and Cr_out=m*Cr_in. So the multiplier realizes the correct chroma processing, therefore the whole color processing of any dynamic range conversion being correctly configurable in the dynamic range conversion circuit.

Furthermore, there may typically be (at least in a decoder) a formatting circuit 310, so that the output color triplet (Y_out, Cb_out, Cr_out) can be converted to whatever needed output format (e.g. an RGB format, or a communication YCbCr format, Y_sigfm, Cb_ sigfin, Cr_sigfm). E.g. if the circuit outputs to a version of a communication channel 379 which is an HDMI cable, such cables typically use PQ-based YCbCr pixel color coding, ergo, the lumas will again be converted from the perceptual domain to the PQ domain by the formatting circuit.

It is important that the reader well understands what is a (de)coding, and how an absolute HDR image, or its pixel colors, is different from a legacy SDR image. There may be a connection to a display tuning circuit 380, which calculates ultimate pixel colors and luminances to be displayed at the screen of some display, e.g. a 450 nit tv which some consumer has at home.

However, in absolute HDR, one can establish pixel luminances already in the decoding step, at least for the output image (here the 1000 nit image).

We have shown this in Fig. 3B, for some typical HDR image being an indoors/outdoors image (the geometry and comprised image objects of which are shown in Fig. 3A). Note that, whereas in the real world the outdoors luminances may typically be 100 times brighter than the indoors luminances, in an actual master graded HDR image it may be better to make them e.g. 10x brighter, since the viewer will be viewing all together on a screen, in a fixed viewing angle, even typically in a dimly illuminated room in the evening, and not in the real world.

Nevertheless, we find that when we look at the luminances corresponding to the lumas, e.g. the HDR luminances L_out, we typically see a large histogram (of counts N(L_out) of each occurring luminance in an output image of this homely scene). This spans considerably above some lower dynamic range lobe of luminances, and above the low dynamic range 100 nit level, because the sunny outdoors images have their own histogram lobe. Note that the luminance representation is drawn non-linearly, e.g. logarithmically. We can also trace what the encoder would do at the encoding side, when making the 100 nit proxy image (and its histogram of proxy luminance counts N(L_in)). A convex function, as shown in Fig. 1, or inside luma mapper 302, is used which squeezes in the brighter luminances, due to the limitations of the smaller luminance dynamic range. There is still some difference between the brightness of indoors and outdoors, and still a considerable range for the upper lobe of the outdoors objects, so that one can still make the different colors needed to color the various objects, such as the various greens in the tree. However, there must also be some sacrifices. Firstly the indoors objects will display (assuming for the moment an 100 or 200 nit display would faithfully display those luminances as coded, and not e.g. do some arbitrary beautification processing which brightens them) darker, darker than ideally desired, i.e. up to the indoors threshold luminance T_in of the HDR image. Secondly, the span of the upper lobe is squeezed, which may give the outdoors objects less contrast. Thirdly, since bright colors in the tent-shaped gamut as shown in Fig. 1 cannot have large saturation, the outdoors colors may also be somewhat pastellized, i.e. of lowered saturation. But of course if the grader at the creation side has control over all the functions (F_enc, FCOL), he may balance those features, so that some have a lesser deviation at the detriment of others. E.g. if the outdoors shows a plain blue sky, the grader may opt for making it brighter, yet less blue. If there was a beautiful sunset, he may want to retain all its colors, and make everything dimmer instead, in particular if there are no important dark corners in the indoors part of the image, which would then have their contents badly visible, especially when watching tv with all the lights on (note that there are also techniques for handling illumination differences and the visibility of the blacks, but that is too much information for this patent application's elucidation).

The middle graph shows what the lumas would look like for the proxy luminances, and that may typically give a more uniform histogram, with e.g. approximately the same span for the indoors and outdoors image object luminances. The lumas are however only relevant to the extent of coding the luminances, or in case some calculations are actually performed in the luma domain (which has advantages for the size of the word length on the processing circuitry). Note that whereas the absolute formalism can allocate luminances on the input side between zero and 100 nit, one can also treat the SDR luminances as relative brightnesses (which is what a legacy display would do, when discarding all the HDR knowledge and communicated metadata, and looking merely at the 0-255 luma and chroma codes).

If all images were containing only achromatic grey colors (so-called black and white images) luminance mapping for dynamic range change would be relatively straightforward.

However, images have colors (coded by some color triplet according to one of several selectable color models), and then things become complex. Even ignoring the non-linear behavior of human color vision, even from a pure linear additive display technology point of view color processing is already complex, since the color gamut of all representable colors is not an easy solid, like an infinite cylinder (in a cylinder one could choose a desired color chromaticity, e.g. half-saturated 580 nanometer yellow, and freely scale its brightness upwards and downwards in the cylinder).

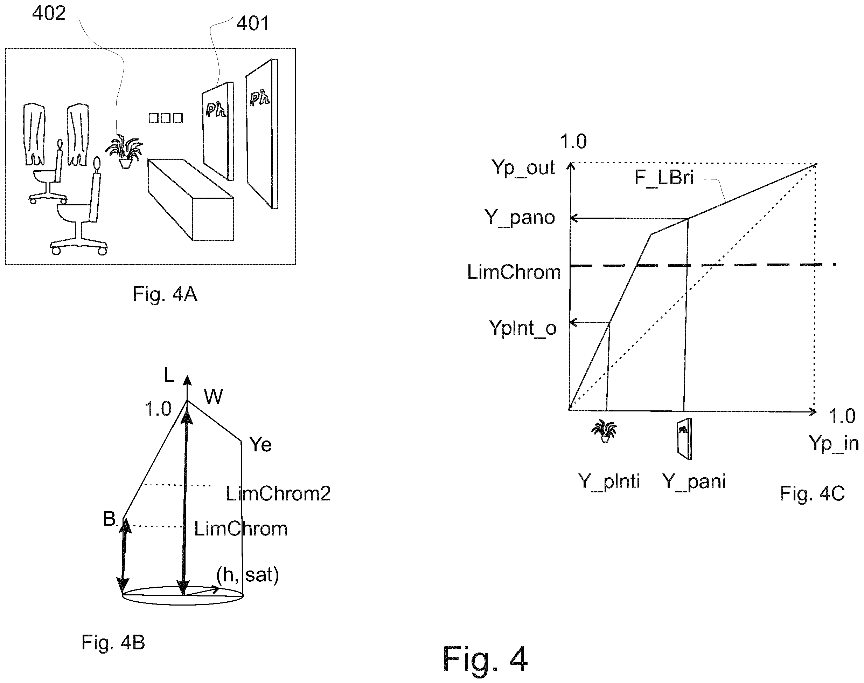

We illustrate this in **Fig. 4**. The luminance processing is performed in any luma representation of the luminances. We have chosen a perceptually uniformized luma (perceptual input lumas Yp_in mapped to perceptual output lumas Yp_out), but other luma representations would have similar issues. The key is that the luma represents the luminance as a one-dimensional invertible function-based relationship: luma=OETF(luminance); luminance=EOTF(luma).

However, color space is three-dimensional. Ergo, a one-dimensional similar brightening will happen to various chromaticities which have different upper limit ("height") of the gamut.

Looking at Fig. 4B of Fig. 4, we learn that even in the (linear) original additive luminance representation of the color gamut, not all colors can reach as high as the whitest white. E.g. a half-saturated blue can by colorimetric definition of the RGB additive color formation not have a higher luminance than LimChrom2. Especially saturated blues (like the primary blue color, unmixed with red or green, itself) may lie below a much lower maximum saturated blue luminance LimChrom, e.g. only 10% of the white luminance (or brightness) for narrow color gamuts such as Rec. 709 primaries, and even almost 1/20th for wide color gamut blue primaries (the more saturated a blue primary of an additive color reproduction needs to be, the more it will need to discard non-blue colors, ergo, the darker it will become). We see that by projecting horizontally the highest point of the gamut (e.g. full primary blue B) onto the luminance axis (yellows Ye may fare better, and can be as bright as e.g. 90% of the brightness of whitest white W). In a non-linear luma-based color gamut, the color positions shift, making things even more complex, but this issue in essence remains. That has the following consequence for one-dimensional processing, such as the luma processing circuit path of Fig. 3. In Fig. 4A we show a hair dresser salon (during night time), which has some dark objects in the unlit back like plant 402, and some illuminated blue panels (401), which may have e.g. text written on it of slightly different blues. Fig. 4C shows the desired luminance processing (mapping towards a smaller luminance dynamic range for the output, but relatively specified with maxima equaling 1.0, so the darker colors need to be brightened, even for ultimate equi-luminance results). So the perceptual input lumas Yp_in normalize to 1.0, and this can be converted to absolute luminances on a range of e.g. 0-2000 nit. The same with the output lumas Yp_out, which represent luminances between e.g. 0 and 700 nit (e.g. to be displayed as an optimized equivalent image for a 700 nit display). In any case, the colors of the plant, e.g. a achromatic grey flower pot (and green leaves) may need to get brightened a couple of times. That is okay, because achromatic greys can map up to 1.0, because there is no LimChrom restriction. Green colors are also relatively bright colors, meaning that they can exist in the RGB gamut up to luminances which are almost as high as the 1.0 (i.e. the 700 nit) of the achromatic colors. So a LimChrom3 for greens will be much higher than LimChrom for the blues. Indeed, blues, purples, and reds are relatively dark colors, luminance-wise. So the problem starts occurring if we (indiscriminately, as the separated luma and chroma processing would do for any input pixel of a scan through an image) map a blue pixel with the desired brightening luma mapping curve F_LBri, depending on the luminance, or more exactly its representative perceptual input luma Y_plnti, of said blue pixel. If the plant was entirely blue, because of its darkness (i.e. in the input image it was far below the maximum luminance LimChrom such pixels can have) also the brightened ouput luma of the plant Yplnt o will still be well below LimChrom. However, an input luma of the light panel Y_pani falling higher up the input luma range, will also be mapped much higher up the output range by F_LBri to output luma Y_pano, which is above LimChrom. This will lead to several image artefacts. Since such a high value does not exist in the gamut, some clipping process will occur (either a smart one or an automatic one). E.g. the highest color component value, will be clipped to its maximum (1.0, or e.g. 255 in 8 bit, or 1023 in 10 bit). So if we have a blue with a little bit of green and red mixed in it (e.g. {10, 12, 270}), the clipped version {10, 12, 255} will have relatively too much red and green compared to yellow, so it may have a hue error and/or desaturation (mix with 50/50 yellow which is anti-blue). Furthermore, if the text on the panel had originally not very different colors, they may all map above LimChrom, and after clipping result in the same color, ergo, since text pixels and surround panels have exactly the same color in the output image, the text is not visible anymore, which can be a serious artefact if the text was important. There are some other ways one could do the brightening. E.g., one could use a convex monotonically increasing function which maps maximum 1.0 input to maximum 1.0 output on the three red, green and blue color channels separately. Due to the non-linearity of the typical desired brightening functions, especially in high dynamic range color gamuts which can be highly non-linear such as a partly logarithmic EOTF defining the gamut, applying such three mappings on the separate channels (instead of a pure brightening luma mapping, and a correction for the chromas) leads to even higher color errors, and all over the gamut (e.g. even dark oranges can become reds etc.). One could also decide to use the mapping function on other color parameters, such the largest color component of a pixel color component triplet (preferably RGB), but that has other issues. Lastly, one could use highly complex color models, even mimicking human vision, but they don't necessarily improve things a lot and in an easy manner, and, especially when human graders are involved, it may at least require new training until they fully understand which parameter influences which aspect in which manner (and also for automata, technically it may be beneficial to have, even if not 100% perfect, a relatively simple system that can handle 99% of the issues quite satisfactorily, in a manageable manner).

Note also that ideally one may in addition want to cater for various types of luminance mapping system in the market, e.g. one may want to use a down-mapper for encoding e.g. any HDR image (e.g. 1000 nit maximum luminance, or 4000 nit, or 10,000 nit) in a standardized manner as a backwards compatible well-displayable SDR image, but then the decoder has to be able to reconstruct the HDR image again by luminance up-mapping the incoming LDR luminances, ergo the algorithm has to be substantially invertible (except for some acceptable minor decoding errors, due to e.g. bit-rate truncation or the like), ergo, one needs to have a good looking HDR image, on the HDR display. That is an additional complexity, which does not make options easier, compared to the standard state of the art luma mapping as explained with Fig. 3.

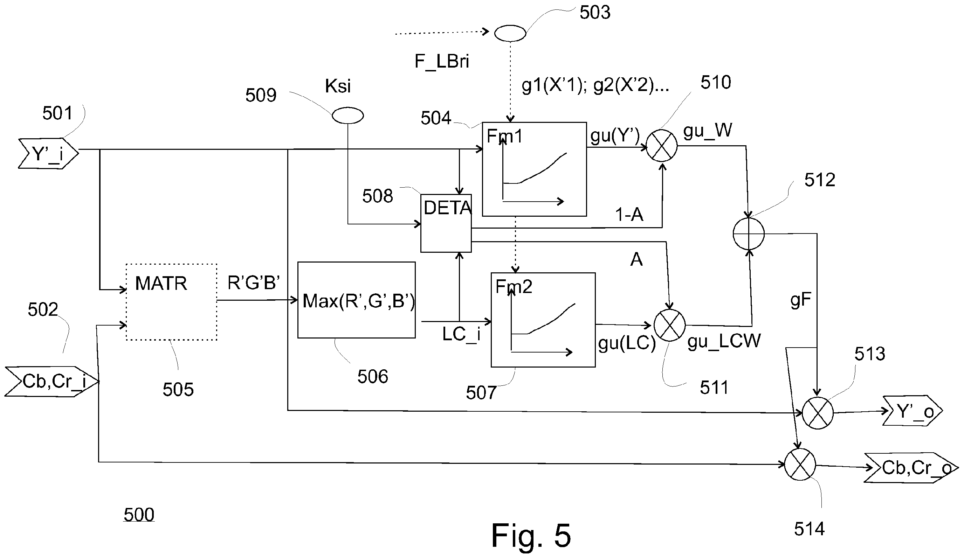

Indeed, in previous research (still secret at priority date of this application) the inventor tested that a luma (ergo also luminance) mapper as taught in Fig. 5 could be used by an encoder to generate the corresponding colors in the SDR proxy for communicating the original colors (in down-grading direction, i.e. with multiplier functions or LUTs that are in the inverse direction as currently shown, i.e. with multipliers that typically become smaller with increasing input luma or in general value, instead of inversely larger as shown in circuits 504 and 507). That is a sufficiently simple circuit or algorithm to implement technically; a straightforward set of calculations. However, because the mapping of each color is now no longer a 1-dimensional technique depending only on the luma of the pixel, (even ignoring potential irreversible clipping issues) the reversal of a luma mapping, which depended on both the -at the decoder unknown- original HDR luma and largest RGB color component of a pixel, becomes difficult to invert for reconstruction of the original creator's HDR image. From research and testing it turned out that it was afterall possible to do the reconstruction at the decoder, but the decoder needed to calculate the HDR colors of the original HDR image from the data of the received SDR proxy which represents the HDR image or video iteratively. Such complexity is not desired in all possible decoders. E.g., one may want to run the decoder on a portable device which has only very few computation resources left to do the decoding and/or there may be an application which demands minimal delays, such as e.g. gaming, especially when also performed on higher spatial resolutions such as a 8K image needing all its pixels color-mapped.

SUMMARY OF THE INVENTION

The above complex issues of accurate color mapping for different luminance dynamic range, and particular the design of an encoder which reduced the processing complexity of an innovative manner of encoding, is elegantly handled by image encoder for encoding an original image (Im_MAST) of pixels, wherein a pixel has a primary brightness, wherein the original image is represented as a different communication image (Im_COMM) having for the pixel a secondary brightness, wherein the secondary brightness lies within a secondary range having a lower maximum brightnesses (ML_C) than an original maximum brightness (ML_V) of a primary range of the primary brightness, wherein the encoder comprises a first circuit (600) arranged to calculate an initial approximation of the secondary brightness (Y'_Ek_SDR) for a pixel being processed, the first circuit comprising:

a largest color component determining circuit (506) arranged to for the pixel determine which is the largest one of a red, green and blue color component representing a color of the pixel, and outputting such largest color component (LC_i);
a weight determination circuit (508) arranged to obtain a value of a control parameter (Ksi) and to calculate a first weight (A) by taking the minimum of the constant 1.0 and a result of a multiplication of the control parameter by a first intermediate value which is equal to the value of a second intermediate value minus 1.0,
wherein the second intermediate value equals a division of the largest color component by an input luma (Y'_i) of the pixel;
wherein the weight determination circuit is arranged to output the first weight and a second weight which is equal to 1.0 minus the first weight;
a first multiplier determination circuit (604) arranged to output a luma-dependent multiplier (gd(Y')) which depends on the value of the input luma;
a second multiplier determination circuit (607) arranged to output a largest component-dependent multiplier (gd(LC)) which depends on the value of the largest color component (LC_i);

a first multiplication circuit (510) arranged to obtain a weighted luma multiplier (gd_W) by multiplying the luma-dependent multiplier (gd(Y')) by the second weight (1-A);

a second multiplication circuit (511) arranged to obtain a weighted largest component multiplier (gd_LCW) by multiplying the largest component-dependent multiplier (gd(LC)) by the first weight (A);

an adder (512) arranged to add the weighted largest component multiplier (gd_LCW) to the weighted luma multiplier (gd_W) to obtain a final multiplier (gFe); and

a scaling multiplication circuit (513) to obtain the initial approximation of the secondary brightness (Y'_Ek_SDR) by multiplying the final multiplier (gFe) by the input luma (Y'_i);

wherein the image encoder comprises a second circuit (700) arranged to yield an improved accuracy second approximation of the secondary brightness (Y'_iko) on the basis of a difference (DEL) between the input luma and an estimate of the input luma derived by luminance up-mapping the initial approximation of the secondary brightness (Y'_Ek_SDR) with a reciprocal value of the final multiplier (gFe).

A brightness can both be relative (e.g. coding an original 1000% brightness of maximum white as a 100% white e.g. legacy SDR image), and absolute, where the pixels have an ascertainable brightness which is a luminance (with which the pixel should ideally be displayed on a receiving side) as a number of nit (e.g. the luminance range of the master HDR image to be coded and communicated may end at ML_V= 5000 nit, as elected by the creator creating an image for such a range, e.g. with explosions comprising pixels up to approximately 5000 nit). Note that in some embodiments only the original Im_MAST may be created -and coded- to have absolute nit pixel brightnesses, i.e. luminances, yet the SDR communication proxy could be relative ( e.g. (255,255,255) coding for 100% white). One can also associate a communication maximum luminance ML_Comm, e.g. 100 or 200 nit, with such proxy image(s). If pixels are to have absolute luminances, the lumas which code those may be defined by an absolute EOTF (or its inverse, OETF), e.g. the Perceptual Quantizer (PQ) EOTF.

In an embodiment of the image encoder the second circuit (700) comprises:

an input (701) to obtain a previous estimate of a lower brightness range luma (Y'_ik);

a first iteration multiplier determination circuit (710) arranged to output a first iterative multiplier (gk1) which depends on the value of the previous estimate of a lower brightness range luma (Y'_ik);

a first iteration multiplication circuit (751) arranged to multiply the first weight (A) by the reciprocal of the control parameter (1/Ksi), yielding a first intermediate result (Im1);

a first iteration adder (761) arranged to add the constant 1.0 to the first intermediate result (Im1) to obtain a second intermediate result (Im2);

a second iteration multiplication circuit (752) arranged to multiply the second intermediate result (Im2) by the previous estimate of a lower brightness range luma (Y'_ik) to obtain a third intermediate result (Im3);

a second iteration multiplier determination circuit (710) arranged to output a second iterative multiplier (gk1) which depends on the value of the third intermediate result (Im3);

a third iteration multiplication circuit (753) arranged to obtain a first weighted iteration multiplier (gk1_W) by multiplying the first iterative multiplier (gk1) by the second weight (1-A); a fourth iteration multiplication circuit (754) arranged to obtain a second weighted iteration multiplier (gk2_W) by multiplying the second iterative multiplier (gk2) by the first weight (A); and

an iteration adder (762) to obtain a current estimate of the reciprocal value the final multiplier by adding the first weighted iteration multiplier to the second weighted iteration multiplier.

Embodiments of the image encoder may work with the primary brightness being a luminance value measured in nits, and the luma code represents this luminance value by mapping it onto the luma code using an opto-electronic transfer function.

Alternatively, the same gamut-savvy brightness mapping processing can be used in a relative gamut, where the gamut top corresponds to X percent instead of X nit.

Advantageously embodiments of the image encoder as claimed in one of the above claims, wherein the first multiplier determination circuit (604) and the second multiplier determination circuit (607) determine a set of multipliers for various values of their respective normalized input (X' 1) based on a function (F_LBri_GRAD) which is determined for a brightness re-grading of the original image by a human or automatic color grader, wherein the multipliers are determined based on the function as: for any input value (X' 1) the corresponding multiplier (g1(X' 1)) is equal to the output value of the function when having the input value as input, divided by the input value.

Advantageously, if not a fixed value of Ksi is chosen (e.g. pre-baked in the encoder and decoder), the encoder coordinates its elected value with the decoder, e.g. by communicating it in a Supplemental Enhancement Information message.

Useful is also a method of encoding an original image of pixels, wherein a pixel has a primary brightness, wherein the encoding involves representing the original image as a different communication image which has for the pixel a secondary brightness, wherein the secondary brightness lies within a secondary range having a lower maximum brightnesses (ML_C) than an original maximum brightness (ML_V) of a primary range wherein the primary brightness lies, wherein encoding comprises a first stage of calculations arranged to calculate an initial approximation of the secondary brightness (Y'_Ek_SDR) for a pixel being processed, the first stage calculations comprising:

determining which is the largest one of a red, green and blue color component representing a color of the pixel, and outputting such largest color component (LC_i);

obtaining a value of a control parameter (Ksi) and calculating a first weight (A) by taking the minimum of the constant 1.0 and a result of a multiplication of the control parameter by a first intermediate value which is equal to the value of a second intermediate value minus 1.0,

wherein the second intermediate value equals a division of the largest color component by an input luma (Y'_i) of the pixel;

and a second weight which is equal to 1.0 minus the first weight;

determining a luma-dependent multiplier (gd(Y')) which depends on the value of the input luma;

determining a largest component-dependent multiplier (gd(LC)) which depends on the value of the largest color component (LC_i);

determining a weighted luma multiplier (gd_W) by multiplying the luma-dependent multiplier (gd(Y')) by the second weight (1-A);

determining a weighted largest component multiplier (gd_LCW) by multiplying the largest component-dependent multiplier (gd(LC)) by the first weight (A);

adding the weighted largest component multiplier (gd_LCW) to the weighted luma multiplier (gd_W) to obtain a final multiplier (gFe); and

determining the initial approximation of the secondary brightness (Y'_Ek_SDR) by multiplying the final multiplier (gFe) by the input luma (Y'_i);

wherein the encoding comprises a second stage of calculations arranged to yield an improved accuracy second approximation of the secondary brightness (Y'_iko) on the basis of a difference (DEL) between the input luma and an estimate of the input luma derived by luminance up-mapping the initial approximation of the secondary brightness (Y'_Ek_SDR) with a reciprocal value of the final multiplier (gFe).

An embodiment of that method of encoding an original image of pixels may use a second stage of calculations comprising:

obtaining a previous estimate of a lower brightness range luma (Y'_ik);

determining a first iterative multiplier (gk1) which depends on the value of the previous estimate of a lower brightness range luma (Y'_ik);

multiplying the first weight (A) by the reciprocal of the control parameter (1/Ksi), yielding a first intermediate result (Im1);

adding the constant 1.0 to the first intermediate result (Im1) to obtain a second intermediate result (Im2);

multiplying the second intermediate result (Im2) by the previous estimate of a lower brightness range luma (Y'_ik) to obtain a third intermediate result (Im3);

determining a second iterative multiplier (gk1) which depends on the value of the third intermediate result (Im3);

determining a first weighted iteration multiplier (gk1_W) by multiplying the first iterative multiplier (gk1) by the second weight (1-A);

determining a second weighted iteration multiplier (gk2_W) by multiplying the second iterative multiplier (gk2) by the first weight (A); and

determining a current estimate of the reciprocal value the final multiplier by adding the first weighted iteration multiplier to the second weighted iteration multiplier.

Embodiments of the encoding method have the primary brightness defined as a luminance value measured in nits, and the luma code represents this luminance value by mapping it onto the luma code using an opto-electronic transfer function.

Embodiments of the encoding method perform the determination of the luma-dependent multiplier (gd(Y')) and the determination of the largest component-dependent multiplier (gd(LC)) are based on determining a set of multipliers (g1(X'1); g2(X'2)) corresponding to respective ones a set of normalized input values (X'1; X'2), wherein for each normalized input value (X'1) the corresponding multiplier is determined based on a function (F_LBri _GRAD) which function is determined for a brightness re-grading of the original image by a human or automatic color grader, by determining the multiplier (g1(X'1)) by dividing the output result of applying the function to the respective normalized input value (X' 1) by the respective normalized input value (X' 1), and wherein the luma-dependent multiplier (gd(Y')) is the multiplier from the set for a normalized input value (X' 1) equal to the input luma (Y'_i), and wherein the largest component-dependent multiplier (gd(LC)) is the multiplier from the set for a normalized input value equal to the largest color component (LC_i).

Corresponding to the innovative image encoder is an innovative image decoder for reconstructing an original image of pixels, wherein a pixel has a primary brightness, wherein a communication image (Im_COMM) is received by the image decoder as representation of the original image, which communication image has for the pixel a secondary brightness, wherein the secondary brightness lies within a secondary range having a lower maximum brightnesses (ML_C) than an original maximum brightness (ML_V) of a primary range of the primary brightness, wherein the decoder comprises a luminance up-mapping circuit (500) comprising:

a luma input (501) to receive an input luma (Y'_i) of the pixel;
a chroma input (502) to receive two input chroma components (Cb,Cr_i) of the pixel
a largest color component determining circuit (506) arranged to for the pixel determine which is the largest one of a red, green and blue color component representing a color of the pixel, and outputting this as a largest color component (LC_i);
a weight determination circuit (508) arranged to obtain a value of a control parameter (Ksi) and to calculate a first weight (A) by taking the minimum of the constant 1.0 and a result of a multiplication of the control parameter by a first intermediate value which is equal to the value of a second intermediate value minus 1.0,
wherein the second intermediate value equals a division of the largest color component by the input luma (Y'_i);
wherein the weight determination circuit is arranged to output the first weight and a second weight which is equal to 1.0 minus the first weight;
a first multiplier determination circuit (504) arranged to output a luma-dependent multiplier (gd(Y')) which depends on the value of the input luma;
a second multiplier determination circuit (507) arranged to output a largest component-dependent multiplier (gd(LC)) which depends on the value of the largest color component (LC_i);
a first multiplication circuit (510) arranged to obtain a weighted luma multiplier (gd_W) by multiplying the luma-dependent multiplier (gd(Y')) by the second weight (1-A);
a second multiplication circuit (511) arranged to obtain a weighted largest component multiplier (gd_LCW) by multiplying the largest component-dependent multiplier (gd(LC)) by the first weight (A);
an adder (512) arranged to add the weighted largest component multiplier (gd_LCW) to the weighted luma multiplier (gd_W) to obtain a decoder final multiplier (gF); and
a scaling multiplication circuit (513) to determine an output luma (Y'_o) which is a reconstruction of the luma of the pixel in the original image (Im_MAST), by multiplying the input luma (Y'_i) by the decoder final multiplier (gF); and
a chroma scaling multiplication circuit (514) to determine two output chroma components (Cb,Cr_o) which are a reconstruction of the chroma components of the pixel in the original image, by multiplying the respective input chroma component by the decoder final multiplier (gF).

In fact, the encoder prepares according to the new insights the innovative e.g. SDR proxy images for communication, and the decoder is to decode such encoded images.
An embodiment of the image decoder produces the output luma which encodes a pixel luminance, i.e. a value measured in nits, a.k.a. Cd/m2.
Embodiments of the image obtain the value of the control parameter (Ksi) from an encoder of the communication image, such as from metadata associated with the communication image.
That is in case not always e.g. Ksi=1.0 is used. The method works much better if an optimal value for each HDR scene image can be chosen by the encoder, since a scene with dark and bright saturated blues will behave colorimetrically very different from a scene with e.g. pastel colors.
Useful is also a method of reconstructing an original image of pixels, wherein a pixel has a primary brightness, by decoding a received communication image (Im_COMM) which is a representation of the original image, which communication image has for the pixel a secondary brightness, wherein the secondary brightness lies within a secondary range having a lower maximum brightnesses (ML_C) than an original maximum brightness (ML_V) of a primary range of the primary brightness, wherein the decoding comprises:

receiving an input luma (Y'_i) of the pixel;
receiving two input chroma components (Cb,Cr_i) of the pixel
determining which is the largest one of a red, green and blue color component representing a color of the pixel, and outputting this as a largest color component (LC_i);
obtaining a value of a control parameter (Ksi) and calculating a first weight (A) by taking the minimum of the constant 1.0 and a result of a multiplication of the control parameter by a first intermediate value which is equal to the value of a second intermediate value minus 1.0,

wherein the second intermediate value equals a division of the largest color component by the input luma (Y'_i);

determining a second weight which is equal to 1.0 minus the first weight;

determining a luma-dependent multiplier (gd(Y')) which depends on the value of the input luma;

determining a largest component-dependent multiplier (gd(LC)) which depends on the value of the largest color component (LC_i);

determining a weighted luma multiplier (gd_W) by multiplying the luma-dependent multiplier (gd(Y')) by the second weight (1-A);

determining a weighted largest component multiplier (gd_LCW) by multiplying the largest component-dependent multiplier (gd(LC)) by the first weight (A);

adding the weighted largest component multiplier (gd_LCW) to the weighted luma multiplier (gd_W) to obtain a decoder final multiplier (gF); and

determining an output luma (Y'_o) which is a reconstruction of the luma of the pixel in the original image (Im_MAST), by multiplying the input luma (Y'_i) by the decoder final multiplier (gF); and

determining two output chroma components (Cb,Cr_o) which are a reconstruction of the chroma components of the pixel in the original image, by multiplying the respective input chroma component by the decoder final multiplier (gF).

Embodiments of this method of reconstructing an original image obtain the control parameter (Ksi) form an encoder which produced the communication image (Im_COMM) which represents the original image.

The novel insights may be encompassed in distributed signals, comprising the generated proxy image and the Ksi control parameter, e.g. a broadcast signal, or a signal transmitted over a network cable or written on disk. Such a signal will typically contain e.g. three arrays of for all spatial pixel positions a luma value, and two chroma values, and metadata comprising a brightness mapping function F_LBri_GRAD, and typically (often) some metadata specifying the nature of the original HDR image (such as its maximum luminance ML_V), or -if not a single standard pre-agreed EOTF like PQ is used- potentially an indication of the OETF used for generating the lumas (casu quo the EOTF for converting the output lumas of the decoding calculations to actual pixel luminances), and specifically the Ksi value for the present image, or a set of images.

They may also be embodied as a computer program product comprising a tangible memory comprising coded software which when executed on a processor performs the method of encoding, or a computer program product comprising a tangible memory comprising coded software which when executed on a processor performs the method of reconstructing, or a method of downloading over a communication channel software code obtained from a tangible memory, which software code comprises a codification of instructions which when executed on a processor performs the method of reconstructing.

BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions.

In the drawings:

Fig. 1 schematically shows examples of various luminance dynamic range changes (Fig. 1C) of image objects in a cave scene (Fig. 1A), which get objects get different (average) luminances when represented in different maximum luminance versions of the same image; such luminance mappings can be implemented by using luminance mapping functions (Fig. 1D) to be applied to any pixel's luminance, depending only on the input luminance irrespective of the position of the pixel in the image, and such functions can also be calculated in a luma domain coding the luminances; also shown in Fig. 1B is how one can normalize the input color gamut and the output gamut and then show the luminance mappings as vertical shifts of the input colors in the gamut;

Fig. 2 schematically shows various source to sink (user) video or image communication systems which may implement the present innovative embodiments;

Fig. 3 schematically shows some further details of an embodiment of a video decoding apparatus which can transform e.g. absolute luminance-defined HDR images;

Fig. 4 schematically shows some problems that can occur when doing a pure one-dimensional relative luminance boost in a color gamut which is not a cylinder, as typically are all RGB gamuts;

Fig. 5 schematically shows a typical embodiment of a novel luminance down- or up-mapper according to the present innovative insights; it will be used in the present innovative approach not as the down-mapper circuit for an encoder to generate SDR proxy colors, but, it will be used, with inversely shaped multiplier LUTs or functions having the reciprocal values 1/m compared to a down-grading encoder use, as the stable simple circuit architecture for the decoder which is to reconstruct the received lower dynamic range proxy images into a reconstruction of the HDR images;

Fig. 6 shows a first stage partial calculation circuit to perform, as luminance down-mapping, a first estimate of which luma in the proxy image to be communicated out a decoder would like to see to be able to simple reconstruct the original HDR image by a (decoding) luminance up-mapping circuit as shown in Fig. 5;

Fig. 7 shows an example of one manner of a second partial circuit, to follow after the first partial circuit of Fig. 6, and using its initial approximation luma (Y'_Ek_SDR) as a starting value to iteratively obtain more close values to what final (correctly invertible) luma Y'_oSDR should actually be written in the communication image Im_COMM for the current pixel being processed;

Fig. 8 shows another possible embodiment for iterating second partial circuit, which also uses derivatives of the function that was condensed to a one-dimensional luma-dependent function for which the root had to be found, so that faster iteration may be obtained;

Fig. 9 shows an example of how one may want to vary the value of Ksi to get an optimal value for brightness mapping the present image to and from the communication image, for an exemplary archetypical HDR scene scenario with bright colorful clouds;

Fig. 10 shows an example of how one can define multiplier functions or LUTs, i.e. which deliver an optimal multiplier corresponding to an input value, which indicates how pixels having such a value should be boosted respectively dimmed, to obtain the corresponding pixel color component triplet in the other dynamic range representation, i.e. either from a higher dynamic range to a lower one, or vice versa'

Fig. 11 shows an example of a circuit for doing the actual per pixel color transformation, to the smaller maximum luminance output dynamic range of the proxy image, which can be performed at the end of the processing circuit elements chain, after the iterative stage has converged; and

Fig. 12 shows an embodiment of a second partial circuit for iterating according to the secant method.

DETAILED DESCRIPTION OF THE DRAWINGS

**Fig. 5** shows an apparatus embodiment of the present innovation: luminance mapper 500, (which in many pragmatic embodiments may in detail be constructed advantageously as a luma mapper, but as end effect it is a luminance mapper), e.g. a (part of a) electronic circuit, usable e.g. to down-grade from a larger luminance dynamic range (and specifically higher maximum luminance endpoint of that range) to a smaller luminance dynamic range. Or, in this description, when operating on the decoder-side, in a decoding apparatus, it will operate as a luminance up-mapper with inverse operating multipliers (e.g. boosting instead of dimming, e.g. the multipliers in the set typically becoming larger when the input luma becomes larger (as shown inside 504), instead of smaller for a typical down-mapping), to calculate luminances distributed along a larger luminance range than the one of the input SDR image as received. Such a circuit can be used advantageously in many devices. E.g., it may be used in a television receiver to convert any incoming image of lower image maximum luminance to an output image having as highest maximum pixel luminance a higher maximum luminance, e.g. that of the original HDR image from the creation side, or a particular display's maximum luminance ML_D, e.g. of the end-user (e.g. consumer) display on which the image will be displayed. It can also be incorporated in some transcoder somewhere in a video communication system, e.g. to pre-format original videos (e.g. movies) to some delivery format for a line of customers.

In this innovation's teachings, we will assume this to be the basic topology of a decoder, for decoding HDR images or videos received in the format of a lower dynamic range proxy than the original HDR video, and one or more luma up-grading functions (or their inverse, the down-grading functions, which can then be pre-inverted at the decoder before starting the per pixel luma mapping). The original content can be many things, e.g. a pre-recorded and pre-graded movie, a live broadcast, a commercial video etc. We want this decoder to do the relatively straightforward pixel color processing as described, in one pass for successive pixels of a scan through the input image. It turns out as we will show below with encoder embodiment figures, savvy color technology needs to be invented for the encoder then, to make this system operate as such, with this decoding principle.

Assume that on the input (i.e. on luma input (501) for a normalized input luma (Y'_i) and chroma input (502) for two normalized input chroma components (Cb, Cr_i), which is shorthand for the blue input chroma Cb_i juncto the red input chroma Cr_i (as are known to the video skilled person from the YCbCr video color representation)) the {Y'_i, Cb, Cr_i} color is a SDR color, which may be given a standard SDR 100 nit maximum luminance. I.e. any incoming pixel color getting processed will have a standard decodable luminance between 0 and 100 nit (by interpreting it in the SDR manner), yet, via the up-grading mechanism, and a metadata co-communicated function (the inverse of F_LBri), those SDR pixel luminances correspond to HDR luminances in a range of e.g. 0 to 1000 nit (depending on e.g. how the mapping function maps to a particular maximum output luma on a Perceptual Quantizer EOTF scale). The Perceptual Quantizer EOTF-defined luma uniquely corresponds to a luminance in nits and vice versa, e.g. a normalized PQ luma for 1000 nit is for a number of bits N of precision of the luma component is determined as: 0.75*(power(2,N)-1), where N is the number of bits, e.g. typically 10 bit for HDR video.

We will want to calculate the largest color component (LC_i) in a red, green and blue representation of any pixel's input color (for blue scenes, like an underwater scene, or the hair dressing salon of Fig. 4, the largest color component would for most pixels typically be the blue component, which is why those pixels look blue). Thereto the luminance mapper will contain a matrixing circuit 505 to convert from the YCbCr representation to the RGB representation. If the input is already in RGB, then this circuit is not necessary, but there will then similarly be a circuit that converts the RGB representation of the input color to the corresponding Y'CbCr representation.

Such standard color representation transformation, which is fixed depending only on the elected primaries (e.g. Rec. 2020, or EBU/Rec. 709), is well-known to the skilled person and need not here be explained. It will consist of a 3x3 matrix with constant coefficients a, b, ... i, which depend on the primaries which were used for defining the input color, i.e. the input video:

$$\text{(non-linear) } R' = a*Y'\_i + b*Cb\_i + c*Cr\_i$$
$$G' = d*Y'\_i + e*Cb\_i + f*Cr\_i$$
$$B' = g*Y'\_i + h*Cb\_i + i*Cr\_i \qquad \text{[Eqs. 2]}$$

From this one can also calculate the inverse 3x3 matrix to obtain Y'and Cb and Cr on the basis of R', G' and B'.

Largest (RGB primary) color component determining circuit (506) will determine for each input pixel of any image being processed, which one of those three RGB' components is the largest. E.g., a pure blue mixed with only little red and green, such as {R'=3, G'=6, B'=70}, would have blue as its largest component, but a slightly orangeish yellow pixel would have the red component as the largest one, and then the value of that red component, e.g. 1019, gets outputted as LC_i=1019.

This second value in addition to the pixel's luma, will function in the remainder of the color processing. It says something interesting about the color, in particular regarding the complex 3D nature of the gamut. This will make the processing (which ideally would be done with a 3D LUT, which can map any color on the input to any output color as desired, however, most current technologies cannot handle such on-the-fly re-optimization of the desired 3D LUT for any image of different luminance characteristics in a movie, so something else must be used as processing) more correct yet manageable.

A first multiplier determination circuit (504) is arranged to output a first multiplier (gu(Y')), a luma-dependent multiplier which is selected based on the value of the luma Y' of a pixel. I.e. if the luma has a value of say 0.1 e.g. a multiplier 2.0 may come out, and if the luma is close to the maximum, we may be close to an identity mapping (i.e. almost no multiplicative boost), e.g. gu(Y'=0.9) may be 1.05.

In pragmatic apparatuses, first multiplier determination circuit (504) may be implemented as a lookup table (LUT). These multipliers follow from the luma mapping function (i.e. the luminance mapping function formulated in e.g. PQ luma domain, or another EOTF-based domain if so desired) which was determined for processing the luminance re-determinations of any image, as we will show it can be calculated based on the function, but is an elegant formalism allowing more elegantly to do additional color technology insights and approaches.

One can, as should be understandable to the skilled reader, convert any mapping function between a normalized input (X'_i) and a normalized output (X'_o) by a set of multipliers over the range 0-1 (usually discretized into e.g. 1024 multipliers: g1(X'1), g2(X'1), etc.). Since we will be using the same mapping function, or more precisely its corresponding set of multipliers, on several different input values measured from the pixel colors (the luma respectively the largest color component), we denote a general normalized input as X (instead of Y' for the luma, i.e. in case in a sub-calculation happens to use the luma of a pixel as input; or LC for the largest color component).

The principle is as follows:

Suppose we have a monotonic function F_LBri, which is to e.g. relatively brighten the darker normalized luminances, or actually in the processing embodiment elucidated here normalized lumas, of the input image pixel, so that those dark image objects are still reasonably visible on a much smaller output luminance dynamic range (e.g. they dim in absolute nit representation no more than by a factor 2 compared to the HDR input luminance; remember that the scales still need to be multiplied by their respective absolute values, so the diagonal line of a plot mapping 100 nit maximum linear input to 1000 nit output already corresponds to a 10x brightening of every pixel, and vice versa for down-mapping, so one may want to brighten the darkest pixels compared to the tenfold dimming which would be a curve following the diagonal).

The output luma (as would be desired in a normal mere luma-based mapping as explained with Fig. 3) would be calculated as:

$$Y'o = F\_LBri(Y'\_i) \qquad [Eq. 3\text{-}1]$$

Now one can also elegantly see the function-based mapping as some multiplication, e.g. a boost, which can be implemented by multiplier g (but which in general will not be constant for all pixels, i.e. any input luma, since then one may easily boost the brightest pixels above gamut which will result in deleterious clipping, but it will depend on that input luma):

$$Y'o = g * Y'\_i \qquad [Eq. 3\text{-}2]$$

The value of this multiplier g, is simply determinable for any function shape as:

$$g(Y'\_i) = Y'o/Y'\_i = F\_LBri(Y'\_i)/Y'\_i \qquad [Eq. 3\text{-}3]$$

So, if each image in a video has its own optimal luminance mapping function, specifying how to best re-grade/down-map the (say 1000 nit ML) image to a corresponding (e.g.) 100 nit ML SDR image, differently for night scenes versus scenes of wildfires, one merely needs to -prior to doing the actual pixel processing of the color mapping- establish once the value of the corresponding Y'o for each possible Y'_i luma any pixel of the image can have, and then the corresponding g(Y'_i) value for each possible Y'_i value (in the normalized range 0-1).

This is shown by supply circuit (503), which e.g. ingests one or more luma mapping functions F_LBri (e.g. extracted from the metadata of the video being received), and converts them to corresponding sets of multipliers, and loads those into the LUT. This formulation is neither intended to be specifically limited nor necessarily outside the LUT, as the skilled person can make embodiments where the source is in the circuit 504 (e.g., one may calculate multipliers on the fly in some systems, but for the elucidation, we teach a more pragmatic variant which need not re-calculate the same pixel values over and over 1000x superfluously).

If this was purely a luma-based mapper, then the respective multiplier gu(Y'= Y'_i) would be supplied, and multiplication circuit 513 would apply it to the input luma to obtain the desired output luma Y'_o. And similarly (although more advanced version can apply more advanced color processing to the chroma components; and vice versa more coarse versions could use simpler e.g. heuristic adaptation of the chromas) one may want to scale the chroma components by exactly the same multiplier value, in chroma multiplier 514.

However, the inventor realized that this formalism can be improved in an interesting manner, which is also much better able to handle the complex (non-cylindrical) shape of actual RGB color gamuts (e.g. when shown in the chromaticity-based ground plane variant as in Fig. 4B).

Firstly, one could use the same principle, which uses the same shape/locus of values of the set of multipliers (we have shown an example in the rectangles which starts from a relative boost of say 1.0 for the darkest input lumas and gradually going up to e.g. 3.0 for the brightest pixels) applied on just any normalized input X', which of course should be a useful one, for color-accurate luminance down-mapping.

The largest color component of a RGB representation seems to be a very useful one as a second characterizing/control variable for the brightness processing.

But then the question is how to relate those two in a good manner.

The second multiplier determination circuit (507) yields (having the same set of multipliers loaded in its LUT as the first circuit 504) as its output a second (largest component-dependent) multiplier (gu(LC)) from the set of multipliers, which however now corresponds to an input value equal to the largest component (LC_i) of the pixel being processed. That LC_i value will depend on the one hand on the brightness of the pixel (the amount of energy in the trichromatic color representation), but on the other hand also on the chromatic coordinates of the color, inter alia specifically how far off from the axis of neutral colors in the direction of increasing colors the input color resides (as said, typically in our mappings we do not want to change the hue, as primary criterion, and if avoidable in most mappings of most mapper embodiments we would also like to keep the saturation of the output color either equal to the saturation of the input color, or at least not deviating too much). Note that the "u" of gu points to up-mapping, where the encoder which will have created the images being decoded will have done corresponding down-mapping ("d"). Corresponding doesn't mean a trivial to calculate inverse.

It would be good to use those two multipliers as kind of reference multipliers, to come to a better final multiplier gF. Both have their elegant aspects. E.g., on achromatic colors the luma-based multiplier gu(Y') would do fine, but not on especially more saturated colors, especially when those belong to the darker hue sub-ranges (/categories) like blue, and red, and often also magentas and purples being critical (but even greens, or yellows, could have some problems, in some images, and the present innovation would like to improve for such situations too). Note that for simplicity we describe the innovation per se, i.e. replacing the simple mere luma-based mapping as elucidated with Fig. 3 (i.e. a pure brightening of the colors only), but in practice this processing may also be employed in more complicated color processing circuit embodiments, which do not only perform a chroma co-correction for the change in output luma compared to input luma, but e.g. do more complicated chroma processing which change the chromas with any color LUT as desired (e.g. making the SDR image extra colorfully to compensate for the lack of luminance), or even cooperate in a chain of processing circuits with a pre- or post-chromatic gamut mapper, etc. In such scenarios may come into play extra issues with color mappings (e.g. because some colors have already been squeezed into a narrow chromatic color gamut forming the input colors for the present processing, and then there may be less liberties in processing even hue categories that would pose less of a problem had there not been any pre-processing). But the human or automaton will then operate the present luminance mapper in a similar manner, only in a larger chain of processing.

The inventor found that a good manner to come to a suitable final multiplier gF(Y'_i; LC_i) works as follows: Firstly, a control parameter (Ksi) is obtained from a source (509). Since encoder and decoder should use the same value of Ksi, this source will be connected to some mechanism for communicating data between encoder and decoder, e.g. the source will read from a SEI message associated with (e.g. sent immediately before) the current image being processed. The encoder can determine a Ksi value that is optimal for a scene, because it will determine from which saturations the clipping of the minimum operator yielding at least a value one of below equation [4] will start, ergo, where the brightness changing mapping will essentially depend on the largest component value of the pixel. It can be checked -by a human grading the proxy SDR image and its corresponding luminance down-grading function or an automaton- which value a scene needs. E.g. if there are bright saturated colors of different brightness, e.g. in a cloudscape during sunset, or a zombie in a blue mist, the Ksi value can determine that for those saturation the largest component dependency takes over and the luma dependency is reduced to zero or near zero. A default value of Ksi will be Ks0_def=1.0. Well-working values for the majority of types of image one may receive (sports, news, ...) of Ksi may be between 0 and 10, e.g. 2, or 3, but other values may be beneficial in some situations.

The weight determination circuit (508) may typically apply the following equation or something similar, to determine a (typically normalized to 1.0) weight:

$$A= \min \{Ksi*((LC\_i/Y'\_i)-1); 1\} \quad if\ Y'\_i > 0 \qquad [Eqs.\ 4]$$

And for more robust behavior one may typically want to set A= 0 for such pixels which have Y'_i =0

Note that interestingly, if one boosts a color by a certain amount, say g=12, then not only the luma of the color will increase, but also the maximum RGB' color component, by exactly the same amount, so that division behaves similarly irrespective the amount of brightness of a certain chromaticity (i.e. hue and saturation). This ratio LC_i/Y'_i does say something about that chromaticity, ergo, how deviant from a simple cylinder the gamut is at that chromaticity position. Its value can be e.g. 17 for a saturated blue color in a wide gamut primaries RGB system such as e.g. Rec. 2020, where HDR processing can be challenging.

This first weight A, together with a second weight which is the remainder from a totality multiplier being the A value subtracted from one (1-A) will now weigh the two (gamut-position-dependent for any input color) already determined multipliers as per following recipe:

$$gF= A* gu(LC) + (1-A)* gu(Y') \qquad [Eq.\ 5]$$

In a typical pragmatic hardware configuration (but note, Fig. 5 is for non-limited elucidation of the innovation's principles only) Eq. 5 may be realized by first multiplication circuit 510 multiplying the first (luma-dependent) multiplier gu(Y') by the second weight (1-A) obtained from weight determination circuit (508) yielding first weighted multiplier gu_W, and similarly the second multiplication circuit 511 obtains second weighted multiplier gu_LCW from multiplication of gu(LC) by A, and then adder 512 adds both suitably weighted multipliers together to obtain the final multiplier gF..

This final multiplier is ready for use for doing the actual color mapping of the luminance down-mapper (i.e. the scaling of the 3 components of the color vector).

I.e. the same gF value will by used by third multiplication circuit 513 to multiply it by the currently being processed pixel's input luma Y'_i to obtain the corresponding output luma Y'_o for that pixel (of e.g. a 100 nit SDR proxy image, or a 750 nit optimized image for a end-user tv). To have coordinated chromas, the fourth multiplication circuit 514 will do the same multiplication by gF to both input chroma components (Cb,Cr_i), to obtain the corresponding output chromas Cb,Cr_o (so actually inside this may be two multipliers, or two values sent successively through the same multiplier).

Now when developing a coder for this new decoding approach, an advantage (compared to classical 1D mapping, which must use moderate much darker mapping curves, i.e. with lower slopes for the darkest pixels, to make sure all or most of the pixels map into the lower luminance range without clipping) is that brighter images can be obtained in the SDR domain (also without need to take recourse to undue saturation reduction, to try to fit from that direction, making the colors essentially more grey, which are the good colors for 1D luma mapping). Especially for scenes which are supposed to be colorful, and for a HDR scene also bright at least in some parts of the image, such as the hair dressing salon example which is lit with all kinds of blue light sources, creating a rather blue-ish total scene image, one would like the advanced color control the present approach offers.

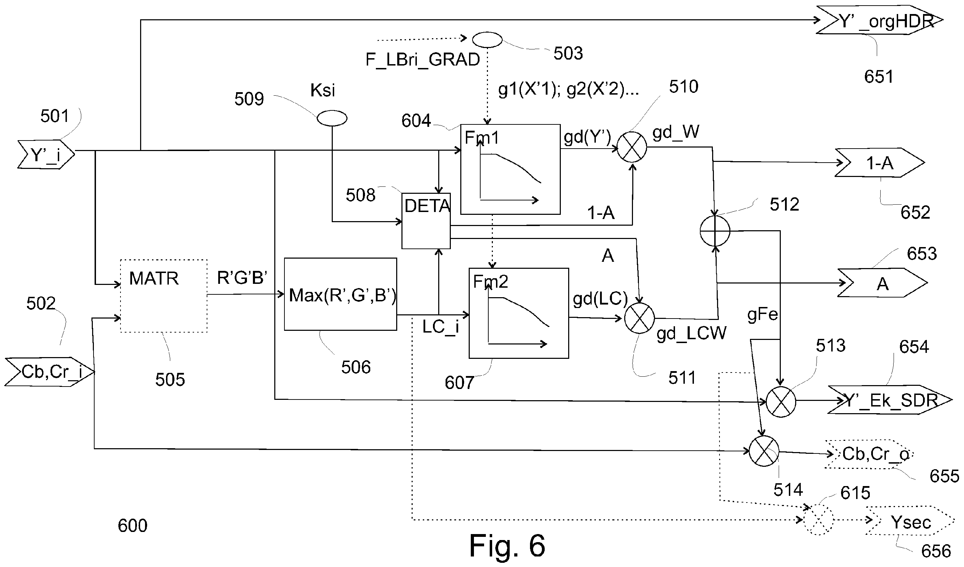

**Fig. 6** shows a first partial circuit 600 of the encoder (corresponding to a first stage of the processing to obtain the correct lower dynamic range -typically SDR- colors of the proxy image to be communicated to decoders, so that such decoders can straightforwardly apply the processing as elucidated with Fig. 5).

This coding is not easily calculated, especially it is not simply applying the inverse one dimensional luma mapping function as in prior art luminance mapping, since there are now two colorimetric properties involved which vary for each image pixel, namely the largest RGB color component in addition to the pixel luma, and these have different values on the encoder (HDR luma and LC) and the decoder (SDR luma and LC received), and it is not easy to calculate one from the other. The encoder in fact has to model what the decoder would do, and the preparation for this cannot be calculated analytically, but has to be done numerically.

Nevertheless, although applying the inverse circuit at the encoder of the decoder circuit doesn't yield the correct encoded luma and largest component for the SDR proxy image pixel, it does form a fair starting point for the zeroth iteration.

First partial encoder circuit 600 receives an input luma Y'_i (which is equal to the original HDR luma Y'_orgHDR of the master HDR image as was created (e.g. graded for a better visual look than a straight from camera capturing from which it was derived) and to be encoded and communicated. Similarly, input chroma Cb,Cr_i are the corresponding original HDR pixel chroma components of any HDR pixel color being processed for being written to the encoded proxy image pixel color data. Otherwise the components behave similarly as explained with Fig. 5, in particular with the same Eq. 4 for the pixel color-dependent (i.e. gamut location dependent) determination of the weights A and 1-A by weight determination circuit 508. The appropriate Ksi value will however e.g. be derived via a user interface. The Ksi value may start at Ksi=1 (it may also start lower e.g. at 0.25). However, the user sees that the balanced behavior (of the circuit calculating a final multiplier gF) is too much geared towards luma-dependent behavior for e.g. the sunset colors. When not using additional color processing, the user may see clipping. With additional color processing, where the user can e.g. choose for an amount of dimming and/or contrast reduction and/or chroma desaturation, the user may find the look of the sunset clouds to become unacceptably weak, and therefore increase Ksi to e.g. 2.0, and find a more bright, contrasty and colorful look of the clouds. If still not enough he can set Ksi to 2.5, etc. When satisfied, this will be the optimal setting for the present image(s) of the scene, and this will be communicated for the decoder(s) to use, so they have matched counter-processing.

The LUTs (encoder luma LUT 604, and encoder Largest Component LUT 607) delivering the appropriate multiplier for each normalized input Xi will be (as shown in the graph of the Fig. 6 box) the inverse-direction of the LUT to be used by the decoder. I.e. each multiplier value will be the reciprocal: if the encoder does a -relative- boost of 2.0 for some dark color, e.g. Xi=0.1, then the decoder will do a countering dimming by multiplying by ½, so that the entire encoding-decoding chain yields a reconstruction which is (substantially, expect for some MPEG minor errors, bit accuracy rounding errors and the like) identical to the original (master) HDR pixel color and image.

Because the encoder down-grades (down-maps), the subscript (suffix) "d" is used in the notation of the respective multipliers (one can also use "f" for forward mapping by the encoder, and "r" for reverse, or inverse, mapping by the decoder).

Luma-dependent down-mapping multiplier gd(Y') is multiplied by 1-A to obtain corresponding weighted luma-dependent multiplier gd_W, and largest component-dependent down-mapping multiplier gd(LC) is multiplied by A (as obtained from 508 applying equation 4, but to the HDR input colors instead of SDR input colors as the decoder would) to obtain corresponding weighted largest component-dependent multiplier gd_LCW, and the two weighted components are again added to obtain final encoding multiplier gFe applicable for the present pixel color being processed.

What is also new now in this circuit 600 is that there are more outputs, delivering what is needed for the second partial circuit 700 doing the second, iterative stage of the processing (which can exist in different flavors depending on the iteration method chosen to be optimal for the situation regarding e.g. speed of convergence, accuracy, calculation amount or resources needed, easy of realization as e.g. an FGPA, etc.). First output 651 delivers a copy of the original HDR luma of the pixel being processed (i.e. Y'_orgHDR). Second output 652 and third output 653 deliver to the iterative circuit/processing stage the calculated values of A and 1-A for this pixel, so that the iterative stage need not determine them again (of course, some hardware or software embodiments may also desire to alternatively calculate this equation internally, and then this data supply is not needed, as in this mere pragmatic circuit realization example, illustrating the novel approach of the innovation). Fourth output 654 will give a first estimate of the SDR luma Y'_Ek_SDR (where k denotes an iteration, which would here be equal to k=1). It will be a coarse approximation of the actual (correct) Y'_SDR_fin, which is the one to be communicated so the Fig. 5 decoder circuit can reconstruct the correct HDR luma (and largest component). How many iterations one will want depends on a balance of affordable calculation budget versus necessary precision (ideally one reconstructs the original to a very high degree of similarity, but as the human eye is not sensitive to very small differences, especially if the original master HDR image from the creation side, or the original captured scene was never seen by the end-customer, so whether the customer applying this circuit will have higher accuracy needs, or will agree with an error somewhat worse than e.g. 2% depends on the implementer), but one will in general want to do at least one iteration with the iteration second encoder partial circuit 700. When using Newton-Raphson iteration 3 to 4 iterations proved well-working, e.g. the fourth iteration yielded a 123 dB PSNR reconstruction quality (the first only 47 and the second 74db), on the hair dresser image. This also depends on which mapping function the grader has determined to be necessary for the image being encoded (e.g. a slope for the blacks near zero called shadow-gain). But it is known to the skilled person in the art to set a measure of how accurate the received proxy image can be reconstructed to the original master HDR images which were encoded.

Fifth output 655 is arranged to supply the down-mapped (typically SDR) chroma components Cb,Cr_o could be used in some lesser quality embodiments, but is in general not necessary, because when the (sufficiently) converged final encoder multiplier gFeCONV has been established after a number of iterations, one can simply copy the input (HDR) chromas and multiply those by gFeCONV to obtain the correct pixel chroma for the processed pixel in the proxy image to be communicated to corresponding decoders.

Also, a sixth output 656 is not necessary in all embodiments. Some iteration methods can simply start from (the monotonic strictly increasing respectively decreasing luminance re-grading functions will pose a sufficiently regular system enabling several well converging iteration methods) one reasonable first estimate (as said, Y'_Ek_SDR obtained by running the circuit 600 processing as if it was good already), and then update from thereon. Some other iteration methods and corresponding circuits will work based on two initial estimates (and their difference, etc.), and then a multiplicative down-grading of the largest component LC_i by the final encoder multiplier gFe in additional multiplier circuit 615 will do well, and will be supplied by sixth output connection in case the second circuit is such a dual-initial-estimate type of iteration. Another possible candidate as second measurement is multiplying the HDR input luma Y'_i by the gain resulting from the largest color component of the pixel, i.e. gd(LC), or alternatively the input luma Y'_i multiplied by the luma-dependent down-mapping multiplier gd(Y').

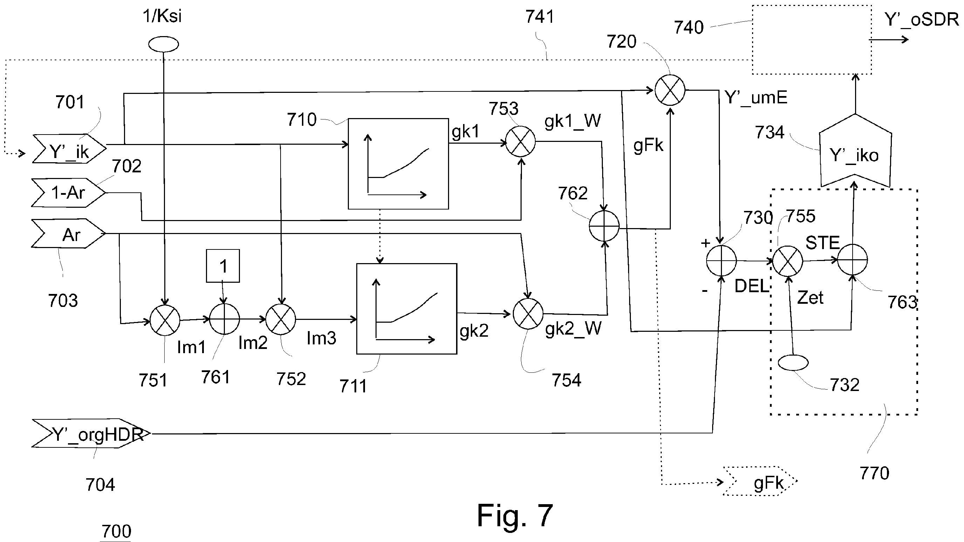

**Fig. 7** shows a (embodiment of a) second circuit 700 of the encoder, which performs at least one iteration (if there are more iterations, some embodiments may feed in again the previous iteration from the output of this circuit to the input to iterate further; or other embodiment realization may have a fixed number of e.g. 3 such circuits pre-configured behind each other).

It has an iterative luma input 701, arranged to receive an iterated (current) estimate of the required SDR proxy luma (corresponding to the original HDR pixel color). When performing the calculations the first time, it will receive the coarse first estimate from the first stage/circuit as explained with Fig. 6, i.e. Y'_Ek_SDR. When run further times it will receive iteration luma Y'_ik, where k is an iteration counter, so it will receive Y'_ik1, Y'_ik2, until the iterative calculation stops. These further iterations are the output of the second circuit: iteration output luma Y'_iko, shown as being fed back by signal connection 741. This would -in this embodiment- keep happening until an iteration deciding circuit 740 decides there are enough iterations, e.g. because the output seems to be close enough (e.g. this can be measured by seeing that the result Y'_iko does not seem to get significantly different values anymore, e.g. less than a percent or a pre-established fraction of a percent, in which case it can be output as final SDR proxy output luminance Y'_oSDR, of that pixel, for ultimate supply once the encoded image is complete to decoders. However, other embodiments may e.g. just run through N fixed successive iteration stages without analysis of the convergence and decision, e.g. a fixed circuit of 4 successive iteration stages of the type of circuit 700 being judged sufficient for the apparatus for any HDR input video situation (i.e. whatever remaining errors still exist, the manufacturer takes for lief). Note that the HDR reconstruction error (i.e. DEL), because of the (initially unknown) multiplicative relationship, is also related to the SDR error of the approximation of the truly correct SDR proxy luma.

It also has an original luma input 704, which receives each time a copy or the original HDR luma Y'_orgHDR, since this will be used for comparing whether the estimate is good (by remapping it towards the HDR domain, and comparing it with this ground truth for the pixel). There is also a first weight input 702 for receiving the second weight 1-Ar (which can be calculated once and then copied, since, although we don't know the ultimate Y'oSDR, we do know that even if misestimated the ratio with the correct SDR largest color component LC_oSDR corresponding to that Y' oSDR will always be constant, that is for a pixel position being processed). A second weight input 703 gets the first weight Ar.

A first normalized function-based multiplier calculation circuit 710 works similarly as circuit 504, i.e. it determines an output multiplier based on the value of its input, which is now the current inputted iteration luma Y'_ik, to obtain a first intermediate multiplier gk1. And it will again work in the up-grading (or reverse) direction since it starts from an iteration of an SDR luma, and needs to compare accuracy of the iteration via comparison with the ground truth HDR luma, of the master HDR image pixel to be encoded.

A second normalized function-based multiplier calculation circuit (711) applies the same multiplier determining function (e.g. LUT), but now with an input which is derived based on the current inputted iteration luma Y'_ik as follows: It uses first iteration multiplication circuit 751 to multiply the reciprocal value of Ksi -i.e. 1/Ksi- by the first weight Ar to obtain a first intermediate result Im1, uses first iteration adder 761 to add the constant 1 to that first intermediate result Im1, yielding second intermediate result Im2, which is multiplied by the current inputted iteration luma Y'_ik in second iteration multiplication circuit 752 to obtain a third intermediate result Im3.

And this third intermediate result Im3 is the input for the second normalized function-based multiplier calculation circuit 711, i.e. controlling, e.g. as index in the LUT, which second intermediate multiplier gk2 for this iteration k would come out.

Third iteration multiplication circuit 753 multiplies the first intermediate multiplier gk1 by the second weight 1-Ar, yielding first weighted multiplier gk1_W, and fourth iteration multiplication circuit 754 multiplies the second intermediate multiplier gk2 by the first weight Ar, yielding second weighted multiplier gk2_W.

Second iteration adder 762 adds the first weighted multiplier gk1_W to the second weighted multiplier gk2 _W to obtain the final multiplier gFk for the current iteration (remember this depends on the value of the Y'_ik, and the shape of the function, F_LBri, so it will also vary through the iterations, by calculation in this second stage circuit).

Thereafter a current estimate up-mapped HDR luma Y' _umE is calculated by multiplying the current SDR estimate luma, i.e. Y'_ik, by the final multiplier gFk, which represents a current estimate of the needed up-mapping back to HDR, i.e. an estimate of what the simple stable decoder processing will do.

A subtracter 730 will subtract the ground truth original HDR luma Y'_orgHDR from the estimate up-mapped HDR luma Y' _umE to obtain a difference DEL, which is an indication that the estimate is not fully accurate yet.

The difference DEL is multiplied by an iteration size Zet (supplied by source 732, which may be a fixed set value in a memory, or calculation process, etc.) in fifth iteration multiplication circuit 755, yielding a step STE. This step is added to the current inputted iteration luma Y'_ik in third iteration adder 763 to obtain the current iteration output luma Y'_iko. Another estimate updating circuit 770 may be present in other embodiments, e.g. one which also takes into account local derivatives (e.g. in Newton-Raphson iteration) to obtain a better estimate of the next iteration HDR luma Y'_ik2..

Iteration deciding circuit 740 either continues iterating, or sends the sufficiently accurate SDR luma estimate for the pixel, i.e. Y'_oSDR, to the final processing, which calculates the actual pixel color component triplet to write in the proxy image pixel position. Again some alternative processing embodiments can be constructed in actuality which yield the same result. Either (optionally) one could output the current generation (now final) final multiplier gFk, for multiplying by the two original HDR chromas to obtain the corresponding SDR chroma components, since we already have the correct SDR luma. A third processing circuit for doing the actual down-grading color mapping can also re-establish by itself (inside that circuit) the correct multiplier, since it will be equal to Y'oSDR/Y' orgHDR (and some more advanced embodiments may in case a value of the luma is zero use a safe alternative multiplier gSZER).

In equation formulation this second circuit performs the following.

Since largest component and luma scale similarly, we know (at the encoder) that the decoder can do:

$$LC\_oHDR = gFkfinit * LC\_i \qquad [Eq. 6],$$

in which gFkfinit would be the final (i.e. luma/component-balanced) multiplier after the last iteration was performed, and the SDR largest component LC_i is what the decoder can easily calculate from the image pixel colors of the SDR proxy image it receives (as explained with Fig. 5).

The encoder should somehow invert this equation, i.e. derive the SDR largest component value LC_i (it can already easily determine LC_oHDR on its end, since it gets the HDR color components as input, from the HDR image to be encoded).

And, that determined (estimated) LC_i _encoder value should be such that, if it is again processed by the decoder, Eq. 6 should yield the correct LC_oHDR value, i.e. that value the encoder currently sees in the input image for the current pixel being processed.

We can write the difference (or error) DEL as a function, for which we should find the root, i.e. a zero difference:

$$FR(Y'\_ik, LC\_ik) = gFk(Y'\_ik, LC\_ik) * Y'\_ik - Y'\_orgHDR \qquad [Eq. 7]$$

LC_ik is now the largest RGB component for the k-th iteration, i.e. belonging to the k-th luma Y'_ik, taking into account also the k-th approximation of the chromas (which can be calculated by applying the current multiplier gFk; n.b. actually this is the explaining math, but this value need not actually be calculated in circuit embodiments, as was explained with Figs. 6 and 7, we only need to find the correct brightness situation, i.e. luma and or Largest color component of the SDR image pixel to be communicated, as the rest will follow, and can therefore be calculated once, in actuality, when the iteration has stopped and the sufficiently accurate colors have to be written into the image, but for explanation we can do this calculation as much as we want).

We have also made more explicit that gFk is a function of the two pixel color measures, by putting them between ellipses "()".

Since the Ksi is a same value for both encoder and decoder, we can also (since the encoder will also know it), use the innovative luminance mapping approach as a regularizer to make the problem one-dimensional again, i.e. more easily solvable by iteration:

$$FR(Y'\_ik)= gFk(Y'\_ik, (A/Ksi\_1)* Y'\_ik)*Y'\_ik-Y'\_orgHDR \qquad [Eq. 8]$$

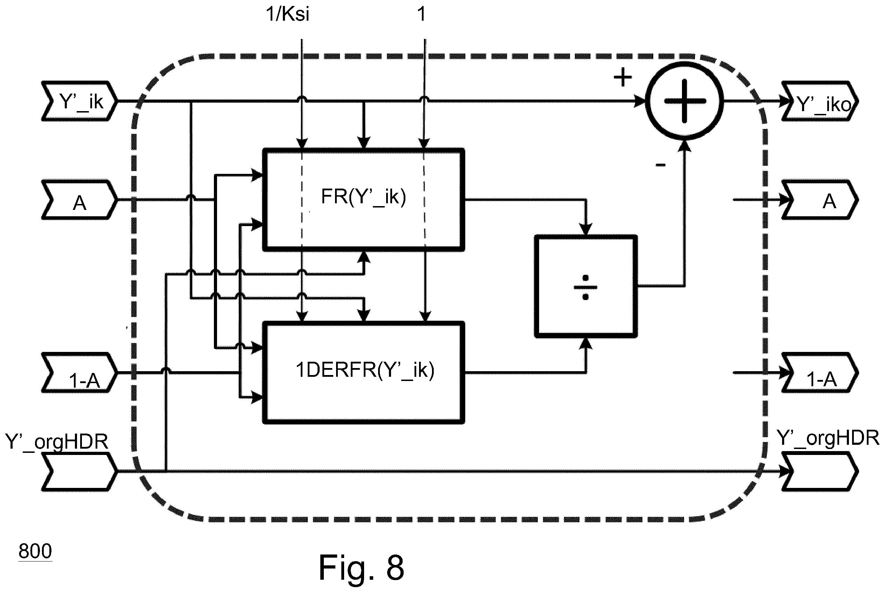

Fig. 8 shows another embodiment 800 example for the iterating second partial circuit, when Newton-Raphson iteration is preferred.

The required derivative of error function 1DERFR of Eq. 7 can be calculated as:

$$1DERFR(Y'\_ik)=\{A*(A/Ksi+1)*der\_gu((A/Ksi\_1)*Y'\_ik)+(1-A)*$$
$$der\_gu(Y'\_ik)\}*Y'\_ik+A*gu((A/Ksi+1)*Y'\_ik)+(1-A)*gu(Y'\_ik) \qquad [Eq. 9]$$

In this equation gu is the current iteration multiplier, for the current pixel color, and der_gu is the derivative of that multiplier, over variation in iteration, which can be calculated e.g. as the difference with a previous multiplier value for this $Y'\_ik$ situation, e.g. kept in a LUT functioning as memory, divided by the iteration step size.

In practice der_gu can e.g. be approximated from the multiplier g when g is in a LUT as follows.

$$der\_gu=[(g(Hx)-g(Lx))/(Hx-Lx)]*(x-Lx),$$

in which Hx is the next higher tap of the LUT above normalized real precision value x, and Lx is the first lower tap of the LUT.

One can also calculate a der_gu LUT, by taking the mathematical derivative of the luma mapping function (which is possible for luma mapping functions used in practice, as they are invertible, an in general smooth).

The inventor researched that several iteration methods may be applied, e.g. bisection method, regular falsi, secant method, Newton-Raphson method, Halley's method, Illinois method, etc. (ergo, more than the actual iterative method used, it is the new luminance mapping approach and insights that is important). The secant method may be particularly useful for video applications due to its relatively fast convergence yet simplicity over Newton-Raphson.

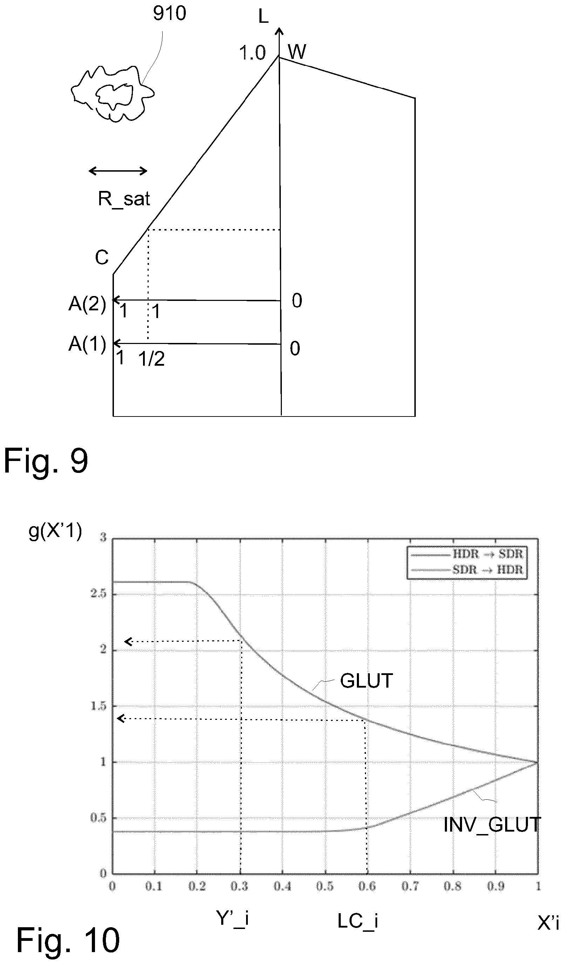

**Fig. 9** shows an example of how one can use Ksi as a control parameter for the behaviour of the mapping. It shows how fast the system moves from the colorimetric behavior of the first multiplier, to that of the second multiplier. We show two evolutions of the value of the first weight A, over color gamut when increasing along the axis the saturation of a color, in case Ksi equals 1.0 and in case it equals 2.0. Note that we said that the (exact value of the) pixel brightness (i.e. luma) is not relevant in the division of Eqs. 4, so never mind the height of the scales (those are just chosen arbitrarily to easily draw, but the scales work similarly for any luma $Y'\_i$). Suppose we have some critical illuminated (variable grey-level) cloud object 910 in the image, in the hue range C. For yellows and oranges one can think sunsets, but for cyans or blues one can have a blue-illuminated mist of a nighttime swamp or a disco, or the plasma flames around an angry witch, etc. This object may cover a range of saturations R_sat from e.g. fully saturated to e.g. 80% saturated. If we were to use the Ksi=1 elected value of the control parameter, we may not have enough LC_i-multiplier-behavior in that color range, and e.g. some of the pixels in the cloud may start to clip (and clip too much). If one raises the Ksi to e.g. 2.0, the value of A=1 may already be obtained at the least saturation of the R_sat range (or maybe it is sufficient since most errors disappear if one choses a Ksi value which maps to one halfway the R_sat range, and also for larger saturations due to the minimum operator in Eqs. 4). A human grader can elect a suitable Ksi to use (and if necessary communicate to receivers, because the human operator would typically occur at the creation side of video preparation for distribution technologies) by looking at what starts to look ugly (e.g. color bandings in gradual objects like a balloon, etc.). He may then increase Ksi till he is satisfied for that scene (i.e. set of similarly looking images) or image. An automaton (whether residing in a creation-side video encoder, or a consumption side tv), may look at artefacts. E.g. it may measure color differences of a set of adjacent pixels in the input higher dynamic range image, and see to which extent they are still present in the lower dynamic range output image, e.g. according to a psychovisual model in the more advanced embodiments, and e.g. merely checking whether pixel colors that were supposed to be different in the original higher dynamic range image have become identical in the output image. The Ksi can then be determined to try to yield still a minimal amount of difference for such pixels in the output image. A simple difference of luma metric can be used.

E.g.: if $Y'\_i(x=0,y=0)- Y'\_i(x=1,y=0)= 10$, where x and y are spatial coordinates of just two selected adjacent pixels one may desire a constraint of $Y'\_o(x=0,y=0)- Y'\_o(x=1,y=0)= 10/5 = 2$, and tune Ksi to try to reach at least that level, for at least a subset of the critical pixels. Another metric can be to measure the max. of absolute value o Cb and Cr, which should both be below 0.5 to have valid proxy colors. This defines the minimum Ksi one can still use (higher values of Ksi will from a certain value get the whichever image legal). As a second measure measure one may want to look at RGB clipping, after the Y'CbCr to R'G'B' matrixing. E.g. the hair dressing salon image shows 29% overshoot at Ksi=0.3 for blue, so one may want to raise to e.g. Ksi =2 giving only 7% overshoot (which might be considered acceptable by the encoder).

Various error measures can be applied in various embodiments, that is not a core insight of our innovation, but rather the explained is. This down-mapper can create brighter colors than present luma-based mappers, without having to rather heavily rely on desaturation or dimming to fit colors in the narrow tip of the gamut, especially for smaller luminance dynamic range outputs. That may be beneficial, especially if, even in the lower dynamic range representations of the original HDR scene master image, one still wants to relatively faithfully retain some bright and colorful look of at least some HDR objects or effects.

**Fig. 10** shows how one can construct multiplier functions (GLUT), or LUTs of multipliers corresponding to respective values of normalized input, whether for an encoder (in the luminance down-grading direction), or a decoder in the reverse direction (the decoder applying the inverse function INV_GLUT).

We see that there are different multiplier values, the higher the input value X'I becomes. E.g., if this is a down-grading LUT, the grader may have found that for the darkest image colors (which will end on a smaller e.g. SDR output range, i.e. the output lumas will be normalized with a smaller ML_V value, e.g. 100 nit), one must brighten them so that a dark object in the shadows doesn't become insufficiently visible. Given all other technical and visual requirements, e.g. how much of a larger original HDR brightness range needs to be squeezed into the narrower range of the proxy communication image, in the multiplier view a boost of 2.6 may be optimal for this scene image's darkest blacks (if in another scene a monster is hiding in an even darker corner, one may desire e.g. a boost of 10.0). Note that the exact selection of the function shape is up to the creator, the present technology is to be able to have correct technical color processing whatever the elected function.

We can now determine in such a LUT the corresponding multiplier for any incoming normalized input value X' 1.

E.g., if the present pixel being color mapped has a luma value Y'_i = 0.3, the corresponding g(Y'_i=0.3) will in this example be 2.6. When that same pixel has a largest RGB component value equal to 0.6, its partial multiplier (i.e. gd(LC)) of the total multiplier (i.e. gFe) will in this example be 1.4. One can do the same for each incoming to be mapped pixel's luma and largest component value.

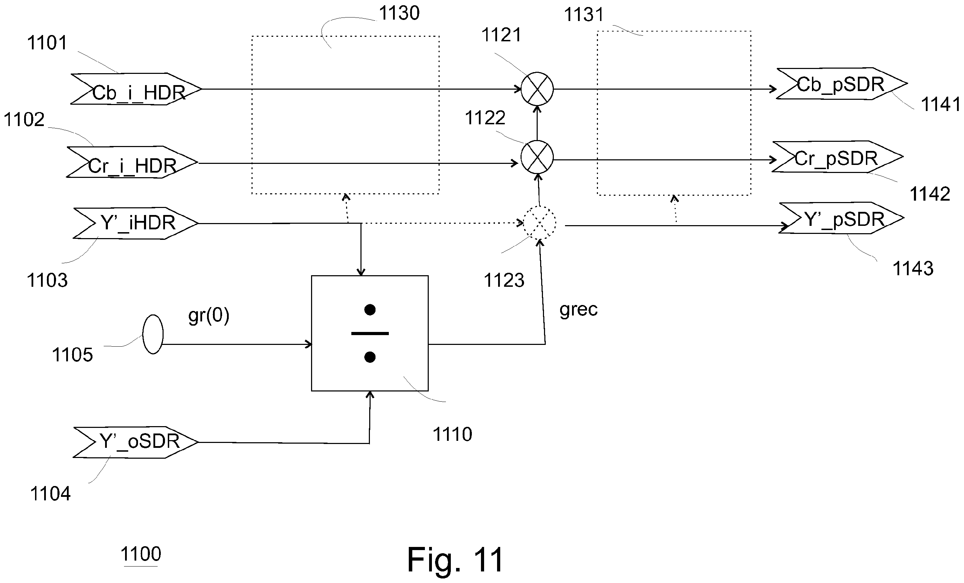

**Fig. 11** shows a pragmatically useful exemplary third stage circuit (1100) for coming to the actual encoded pixel colors to be written into the lower dynamic range proxy image for communication, both the luma and the corresponding chroma.

It has a first ($3^{rd}$ stage) input 1101 for receiving the original HDR input blue chroma component Cb_i_HDR. Second ($3^{rd}$ stage) input 1102 is for receiving the original red chroma component Cr_i_HDR. Third ($3^{rd}$ stage) input 1103 is for receiving the original (HDR) luma Y'_iHDR. Fourth ($3^{rd}$ stage) input 1104 is for receiving the (calculated by iteration) SDR luma Y'_oSDR corresponding to the HDR luma Y'_iHDR (i.e. for the current pixel being processed). This is the (sufficiently iterated) output of the second stage.

Reconstruction multiplier determining circuit 1110 is arranged to determine the applicable proxy multiplier grec for mapping (by multiplication) the input HDR color components to the corresponding SDR color components, correctly down-mapped for enabling easy decoding according to the current brightness-characterizing mix (i.e. straightforward/one-pass calculation of what is taught in the circuit of Fig. 5).

In principle the SDR luma is already known, but one can explicitly calculate it by aid of circuit 1110, which allows some additional options like differential processing of the (near) zero values.

The basic operation for determining how also the Cb and Cr should be scaled by multiplication (so that it is a pure brightness change of the vector, retaining chromaticity) can be determined from looking at how much brighter or dimmer, in the normalized representation typically, the (relative; or absolute) SDR luma of a pixel is compared to its original (relative; or absolute) HDR luma.

So grec becomes for all situations (except when either the HDR or SDR luma, or both, is zero) the division of the SDR luma by the HDR luma:

$$grec = Y'\_oSDR/Y'\_iHDR \qquad [Eqs. 10]$$

$$grec = gr(0) \text{ if } Y'\_oSDR = 0 \text{ or } Y'\_iHDR = 0$$

gr(0) available from source 1105 can be a suitable constant, e.g. a local slope near zero of the mapping function.

It is beneficial however to have embodiments which carefully determine a suitable value of gr(0). E.g. chroma values are often spatially sub-sampled (leading to a reduced amount of data), and the up-sampling can result in ringing artefacts. When those incorrect chromas are then luma-boosted, this can lead to color errors in the blacks. Furthermore, discretized versus of the processing, such as e.g. when using a 1000 point (or even less) LUT for the multipliers in circuit 504 et al., means that the chosen value of gr(0) also determines the mapping behavior between multiplier point 0 and 1. When the luma mapping consists of several sequential operations (such as in applicant's SL-HDR codecs), the chain rule for derivatives can be used.

One can also extrapolate from regular (i.e. non-zero) multiplier values which are calculated by the division of Eqs. 10, e.g.

gr(0)= gr(1)- (gr(2)-gr(1)) for equi-distant points at regular distances DIS, and the like.

A same grec value is used by a first reconstruction multiplier circuit 1121, which multiplies the input blue chroma component Cb_i_HDR by the proxy multiplier grec, and the second proxy multiplier circuit 1122, which multiplies the input red chroma component Cr_i _HDR by the proxy multiplier grec, and to the extent applicable and present the third proxy multiplier circuit 1123, which multiplies the input luma Y'_iHDR by the proxy multiplier grec, yielding the SDR proxy color output components. First (3$^{rd}$ stage) output 1141 is arranged to output proxy blue chroma component Cb_pSDR, second (3$^{rd}$ stage) output 1143 is arranged to output proxy red chroma component Cr_pSDR, and third (3$^{rd}$ stage) output 1143 is arranged to output proxy luma component Y'_pSDR.

In some embodiments the basic multiplicative brightness adjustment of the chroma components may be integrated with further color processing. E.g. a chroma pre-processor 1130 may further change at least one of the HDR input blue chroma component Cb_i_HDR and the HDR input red chroma component Cr_i_HDR. E.g., it may receive a connection to the input luma, and do a luma-dependent multiplication or in general a color-dependent adjustment, which could e.g. also include an additive offset (e.g. reduce the chromas for brighter HDR pixel lumas, and/or increase them for darker input colors). Similar additional chromatic processings can be done in chroma post-processor 1131 in the SDR domain. Since these are options additional to the basic principles of the present innovation, we stick to the essence of the third partial circuit (third stage).

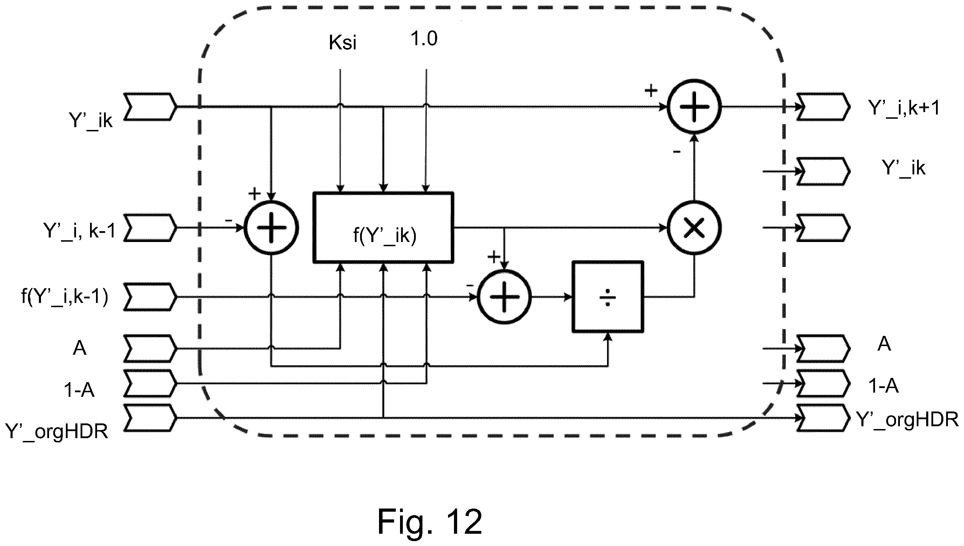

**Fig. 12** is an example of two-input iteration possibilities, namely using the secant method. The components are the same as before, except that previous extra iteration value Y'i,k-1 is a result of a previous iteration (upon first calling of the iteration second stage it may be initialized to another value in several manners, e.g. 1.5* Y'i,k-1), and Y'_i,k+1 is the extra value for the next iteration (Y'_ik then acting as the extra value). The notation f() means the error function, at the position indicated by the value between ellipses.

The Ksi value depends on what one wants, e.g. how much clipping is still realistic. E.g. in the Y'CbCr components may be communicated some extra values than would be legal RGB values, but e.g. for the hair dresser image one can tolerate a little bit of clipping in the large blue light panels. Although giving still such a little bit of clipping, a Ksi value of 4.0 proved favorable for coding that image according to the present principles.

The algorithmic components disclosed in this text may (entirely, or in part) be realized in practice as hardware (e.g. parts of an application specific integrated circuit) or as software running on a special digital signal processor, or a generic processor, etc. At least some of the elements of the various embodiments may be running on a fixed or configurable CPU, GPU, Digital Signal Processor, FPGA, Neural Processing Unit, Application Specific Integrated Circuit, microcontroller, SoC, etc. E.g. complex operations which determine an optimal shape of a mapping function may be performed in firmware, whereas the pixel processing pipeline, which does elementary operations on each and every pixel, e.g. mapping a luminance of that pixel to a resultant luminance for output, may be done in a hardware circuit. Some of the processing may happen on disjunct systems, e.g. as a cloud service. The images may be temporarily or for long term stored in various memories, in the vicinity of the processor(s) or remotely accessible e.g. over the internet. Other memories may contain one or more instructions for configuring or reconfigurating parts of the computations or the processing elements of a processing chain.

It should be understandable to the skilled person from our presentation which components may be optional improvements and can be realized in combination with other components, and how (optional) steps of methods correspond to respective means of apparatuses, and vice versa. Some combinations will be taught by splitting the general teachings to partial teachings regarding one or more of the parts. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc. Some apparatuses may be connected to displays or contain displays.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk, data present in a memory, data travelling via a network connection -wired or wireless. Apart from program code, characteristic data required for the program, such as e.g. control data, may also be embodied as a computer program product. Some of the technologies may be encompassed in signals, typically control signals for controlling one or more technical behaviors of e.g. a receiving apparatus, such as a television. Some circuits may be reconfigurable, and temporarily configured for particular processing by software. Some parts of the apparatuses may be specifically adapted to receive, parse and/or understand innovative signals.

Some of the steps required for the operation of the method may be already present in the functionality of the processor instead of described in the computer program product, such as data input and output steps.

It should be noted that the above-mentioned embodiments illustrate rather than limit the invention. Where the skilled person can easily realize a mapping of the presented examples to other variants, we have for conciseness not mentioned all these options in-depth. Apart from combinations of elements of the invention as combined in the claims, other combinations of the elements are possible. Any combination of elements can in practice be realized in a single dedicated element, or split elements.

Any reference sign between parentheses in the claim is not intended for limiting the claim. The word "comprising" does not exclude the presence of elements or aspects not listed in a claim. In several situations the word "portion" of a set of elements is not intended to exclude that portion may also cover the totality of the elements, because that may function equally in a same manner. The word "a" or "an" preceding an element does not exclude the presence of a plurality of such elements, nor the presence of other elements. "And/or" means that both options may be present together, or one of them may be present alone. The word "e.g." is typically used to indicate that we mean that something else is also belonging to the possibilities, e.g. a similar element, example, or teaching. "i.a." means inter alia, or among others. An element between ellipses "()" will normally be used to indicate that something is optional, i.e. at the same time saying the further aspect is also possible as a variant of a more general concept behind the ellipses, rather than necessary, e.g. (local) luminance boosting is intended to say, (primarily, as main level teaching) "luminance boosting" in general, which may be for all pixels the same, but may also be different, i.e. of the "local luminance boosting" variant, e.g. only applied to some locality of the image.

## Claims

1.  An image encoder for encoding an original image (Im_MAST) of pixels, wherein a pixel has a primary brightness, wherein the original image is represented as a different communication image (Im_COMM) having for the pixel a secondary brightness, wherein the secondary brightness lies within a secondary range having a lower maximum brightnesses (ML_C) than an original maximum brightness (ML_V) of a primary range of the primary brightness, wherein the encoder comprises a first circuit (600) arranged to calculate an initial approximation of the secondary brightness (Y'_Ek_SDR) for a pixel being processed, the first circuit comprising:

    a largest color component determining circuit (506) arranged to for the pixel determine which is the largest one of a red, green and blue color component representing a color of the pixel, and outputting such largest color component (LC_i);
    a weight determination circuit (508) arranged to obtain a value of a control parameter (Ksi) and to calculate a first weight (A) by taking the minimum of the constant 1.0 and a result of a multiplication of the control parameter by a first intermediate value which is equal to the value of a second intermediate value minus 1.0,
    wherein the second intermediate value equals a division of the largest color component by an input luma (Y'_i) of the pixel;
    wherein the weight determination circuit is arranged to output the first weight and a second weight which is equal to 1.0 minus the first weight;
    a first multiplier determination circuit (604) arranged to output a luma-dependent multiplier (gd(Y')) which depends on the value of the input luma;
    a second multiplier determination circuit (607) arranged to output a largest component-dependent multiplier (gd(LC)) which depends on the value of the largest color component (LC_i);
    a first multiplication circuit (510) arranged to obtain a weighted luma multiplier (gd_W) by multiplying the luma-dependent multiplier (gd(Y')) by the second weight (1-A);
    a second multiplication circuit (511) arranged to obtain a weighted largest component multiplier (gd_LCW) by multiplying the largest component-dependent multiplier (gd(LC)) by the first weight (A);
    an adder (512) arranged to add the weighted largest component multiplier (gd_LCW) to the weighted luma multiplier (gd_W) to obtain a final multiplier (gFe); and
    a scaling multiplication circuit (513) to obtain the initial approximation of the secondary brightness (Y'_Ek_SDR) by multiplying the final multiplier (gFe) by the input luma (Y'_i);
    wherein the image encoder comprises a second circuit (700) arranged to yield an improved accuracy second approximation of the secondary brightness (Y'_iko) on the basis of a difference (DEL) between the input luma and an estimate of the input luma derived by luminance up-mapping the initial approximation of the secondary brightness (Y'_Ek_SDR) with a reciprocal value of the final multiplier (gFe).

2.  The image encoder as claimed in claim 1, wherein the second circuit (700) comprises:

    an input (701) to obtain a previous estimate of a lower brightness range luma (Y'_ik);
    a first iteration multiplier determination circuit (710) arranged to output a first iterative multiplier (gk1) which depends on the value of the previous estimate of a lower brightness range luma (Y'_ik);
    a first iteration multiplication circuit (751) arranged to multiply the first weight (A) by the reciprocal of the control parameter (1/Ksi), yielding a first intermediate result (Im1);

a first iteration adder (761) arranged to add the constant 1.0 to the first intermediate result (Im1) to obtain a second intermediate result (Im2);

a second iteration multiplication circuit (752) arranged to multiply the second intermediate result (Im2) by the previous estimate of a lower brightness range luma (Y'_ik) to obtain a third intermediate result (Im3);

a second iteration multiplier determination circuit (710) arranged to output a second iterative multiplier (gk1) which depends on the value of the third intermediate result (Im3);

a third iteration multiplication circuit (753) arranged to obtain a first weighted iteration multiplier (gk1_W) by multiplying the first iterative multiplier (gk1) by the second weight (1-A);

a fourth iteration multiplication circuit (754) arranged to obtain a second weighted iteration multiplier (gk2_W) by multiplying the second iterative multiplier (gk2) by the first weight (A); and

an iteration adder (762) to obtain a current estimate of the reciprocal value the final multiplier by adding the first weighted iteration multiplier to the second weighted iteration multiplier.

3. The image encoder as claimed in claim 1 or 2, wherein the primary brightness is a luminance value measured in nits, and the luma code represents this luminance value by mapping it onto the luma code using an opto-electronic transfer function.

4. The image encoder as claimed in one of the above claims, wherein the first multiplier determination circuit (604) and the second multiplier determination circuit (607) determine a set of multipliers for various values of their respective normalized input (X' 1) based on a function (F_LBri_GRAD) which is determined for a brightness re-grading of the original image by a human or automatic color grader, wherein the multipliers are determined based on the function as: for any input value (X' 1) the corresponding multiplier (g1(X' 1)) is equal to the output value of the function when having the input value as input, divided by the input value.

5. A method of encoding an original image of pixels, wherein a pixel has a primary brightness, wherein the encoding involves representing the original image as a different communication image which has for the pixel a secondary brightness, wherein the secondary brightness lies within a secondary range having a lower maximum brightnesses (ML_C) than an original maximum brightness (ML_V) of a primary range wherein the primary brightness lies, wherein encoding comprises a first stage of calculations arranged to calculate an initial approximation of the secondary brightness (Y'_Ek_SDR) for a pixel being processed, the first stage calculations comprising:

determining which is the largest one of a red, green and blue color component representing a color of the pixel, and outputting such largest color component (LC_i);

obtaining a value of a control parameter (Ksi) and calculating a first weight (A) by taking the minimum of the constant 1.0 and a result of a multiplication of the control parameter by a first intermediate value which is equal to the value of a second intermediate value minus 1.0,

wherein the second intermediate value equals a division of the largest color component by an input luma (Y'_i) of the pixel;

and a second weight which is equal to 1.0 minus the first weight;

determining a luma-dependent multiplier (gd(Y')) which depends on the value of the input luma;

determining a largest component-dependent multiplier (gd(LC)) which depends on the value of the largest color component (LC_i);

determining a weighted luma multiplier (gd_W) by multiplying the luma-dependent multiplier (gd(Y')) by the second weight (1-A);

determining a weighted largest component multiplier (gd_LCW) by multiplying the largest component-dependent multiplier (gd(LC)) by the first weight (A);

adding the weighted largest component multiplier (gd_LCW) to the weighted luma multiplier (gd_W) to obtain a final multiplier (gFe); and

determining the initial approximation of the secondary brightness (Y'_Ek_SDR) by multiplying the final multiplier (gFe) by the input luma (Y'_i);

wherein the encoding comprises a second stage of calculations arranged to yield an improved accuracy second approximation of the secondary brightness (Y'_iko) on the basis of a difference (DEL) between the input luma and an estimate of the input luma derived by luminance up-mapping the initial approximation of the secondary brightness (Y'_Ek_SDR) with a reciprocal value of the final multiplier (gFe).

6. The method of encoding an original image of pixels as claimed in claim 5, wherein the second stage of calculations comprises:

obtaining a previous estimate of a lower brightness range luma (Y'_ik);

determining a first iterative multiplier (gk1) which depends on the value of the previous estimate of a lower brightness range luma (Y'_ik);

multiplying the first weight (A) by the reciprocal of the control parameter (1/Ksi), yielding a first intermediate result (Im1);

adding the constant 1.0 to the first intermediate result (Im1) to obtain a second intermediate result (Im2);

multiplying the second intermediate result (Im2) by the previous estimate of a lower brightness range luma (Y'_ik) to obtain a third intermediate result (Im3);

determining a second iterative multiplier (gk1) which depends on the value of the third intermediate result (Im3);

determining a first weighted iteration multiplier (gk1_W) by multiplying the first iterative multiplier (gk1) by the second weight (1-A);

determining a second weighted iteration multiplier (gk2_W) by multiplying the second iterative multiplier (gk2) by the first weight (A); and

determining a current estimate of the reciprocal value the final multiplier by adding the first weighted iteration multiplier to the second weighted iteration multiplier.

7. The encoding method as claimed in claim 5 or 6, wherein the primary brightness is a luminance value measured in nits, and the luma code represents this luminance value by mapping it onto the luma code using an opto-electronic transfer function.

8. The encoding method as claimed in one of the above encoding method claims, wherein the determination of the luma-dependent multiplier (gd(Y')) and the determination of the largest component-dependent multiplier (gd(LC)) are based on determining a set of multipliers (g1(X'1); g2(X'2)) corresponding to respective ones a set of normalized input values (X'1; X'2), wherein for each normalized input value (X'1) the corresponding multiplier is determined based on a function (F_LBri_GRAD) which function is determined for a brightness re-grading of the original image by a human or automatic color grader, by determining the multiplier (g1(X'1)) by dividing the output result of applying the function to the respective normalized input value (X'1) by the respective normalized input value (X'1), and wherein the luma-dependent multiplier (gd(Y')) is the multiplier from the set for a normalized input value (X'1) equal to the input luma (Y'_i), and wherein the largest component-dependent multiplier (gd(LC)) is the multiplier from the set for a normalized input value equal to the largest color component (LC_i).

9. An image decoder for reconstructing an original image of pixels, wherein a pixel has a primary brightness, wherein a communication image (Im_COMM) is received by the image decoder as representation of the original image, which communication image has for the pixel a secondary brightness, wherein the secondary brightness lies within a secondary range having a lower maximum brightnesses (ML_C) than an original maximum brightness (ML_V) of a primary range of the primary brightness, wherein the decoder comprises a luminance up-mapping circuit (500) comprising:

a luma input (501) to receive an input luma (Y'_i) of the pixel;

a chroma input (502) to receive two input chroma components (Cb,Cr_i) of the pixel

a largest color component determining circuit (506) arranged to for the pixel determine which is the largest one of a red, green and blue color component representing a color of the pixel, and outputting this as a largest color component (LC_i);

a weight determination circuit (508) arranged to obtain a value of a control parameter (Ksi) and to calculate a first weight (A) by taking the minimum of the constant 1.0 and a result of a multiplication of the control parameter by a first intermediate value which is equal to the value of a second intermediate value minus 1.0,

wherein the second intermediate value equals a division of the largest color component by the input luma (Y'_i);

wherein the weight determination circuit is arranged to output the first weight and a second weight which is equal to 1.0 minus the first weight;

a first multiplier determination circuit (504) arranged to output a luma-dependent multiplier (gd(Y')) which depends on the value of the input luma;

a second multiplier determination circuit (507) arranged to output a largest component-dependent multiplier (gd(LC)) which depends on the value of the largest color component (LC_i);

a first multiplication circuit (510) arranged to obtain a weighted luma multiplier (gd_W) by multiplying the luma-dependent multiplier (gd(Y')) by the second weight (1-A);

a second multiplication circuit (511) arranged to obtain a weighted largest component multiplier (gd_LCW) by multiplying the largest component-dependent multiplier (gd(LC)) by the first weight (A);

an adder (512) arranged to add the weighted largest component multiplier (gd_LCW) to the weighted luma multiplier (gd_W) to obtain a decoder final multiplier (gF); and
a scaling multiplication circuit (513) to determine an output luma (Y'_o) which is a reconstruction of the luma of the pixel in the original image (Im_MAST), by multiplying the input luma (Y'_i) by the decoder final multiplier (gF); and
a chroma scaling multiplication circuit (514) to determine two output chroma components (Cb,Cr _o) which are a reconstruction of the chroma components of the pixel in the original image, by multiplying the respective input chroma component by the decoder final multiplier (gF).

10. The image decoder as claimed in claim 9, wherein the output luma encodes a pixel luminance.

11. The image decoder as claimed in claim 9 or 10 wherein the value of the control parameter (Ksi) is obtained from an encoder of the communication image, such as from metadata associated with the communication image.

12. A method of reconstructing an original image of pixels, wherein a pixel has a primary brightness, by decoding a received communication image (Im_COMM) which is a representation of the original image, which communication image has for the pixel a secondary brightness, wherein the secondary brightness lies within a secondary range having a lower maximum brightnesses (ML_C) than an original maximum brightness (ML_V) of a primary range of the primary brightness, wherein the decoding comprises:

receiving an input luma (Y'_i) of the pixel;
receiving two input chroma components (Cb,Cr_i) of the pixel
determining which is the largest one of a red, green and blue color component representing a color of the pixel, and outputting this as a largest color component (LC_i);
obtaining a value of a control parameter (Ksi) and calculating a first weight (A) by taking the minimum of the constant 1.0 and a result of a multiplication of the control parameter by a first intermediate value which is equal to the value of a second intermediate value minus 1.0,
wherein the second intermediate value equals a division of the largest color component by the input luma (Y'_i);
determining a second weight which is equal to 1.0 minus the first weight;
determining a luma-dependent multiplier (gd(Y')) which depends on the value of the input luma;
determining a largest component-dependent multiplier (gd(LC)) which depends on the value of the largest color component (LC_i);
determining a weighted luma multiplier (gd_W) by multiplying the luma-dependent multiplier (gd(Y')) by the second weight (1-A);
determining a weighted largest component multiplier (gd_LCW) by multiplying the largest component-dependent multiplier (gd(LC)) by the first weight (A);
adding the weighted largest component multiplier (gd_LCW) to the weighted luma multiplier (gd_W) to obtain a decoder final multiplier (gF); and
determining an output luma (Y'_o) which is a reconstruction of the luma of the pixel in the original image (Im_MAST), by multiplying the input luma (Y'_i) by the decoder final multiplier (gF); and
determining two output chroma components (Cb,Cr_o) which are a reconstruction of the chroma components of the pixel in the original image, by multiplying the respective input chroma component by the decoder final multiplier (gF).

13. The method of reconstructing an original image wherein the control parameter (Ksi) is obtained form an encoder which produced the communication image (Im_COMM) which represents the original image.

14. A computer program product comprising a tangible memory comprising coded software which when executed on a processor performs the method of encoding as claimed in claim 5.

15. A computer program product comprising a tangible memory comprising coded software which when executed on a processor performs the method of reconstructing as claimed in claim 12.

16. A method of downloading over a communication channel software code obtained from a tangible memory, which software code comprises a codification of instructions which when executed on a processor performs the method of reconstructing as claimed in claim 12.

Fig. 1 A

Fig. 1 B

Fig. 1 C

Fig. 1 D

Fig. 1

EP 4 607 918 A1

Fig. 2

Fig. 3A

Fig. 3B

Fig. 3C

Fig. 3

Fig. 4C

Fig. 4A

Fig. 4B

Fig. 4

Fig. 5

EP 4 607 918 A1

Fig. 6

Fig. 7

EP 4 607 918 A1

**Fig. 8**

800

910

L

1.0  W

R_sat

C

A(2)  1   1                    0

A(1)  1   1/2                   0

# Fig. 9

g(X'1)

3

2.5

2

1.5

1

0.5

0

| | HDR → SDR |
| | SDR → HDR |

GLUT

INV_GLUT

0   0.1   0.2   0.3   0.4   0.5   0.6   0.7   0.8   0.9   1

Y'_i                    LC_i                        X'i

# Fig. 10

**Fig. 11**

EP 4 607 918 A1

Fig. 12

Europäisches
Patentamt

European
Patent Office

Office européen
des brevets

## EUROPEAN SEARCH REPORT

**Application Number**

EP 24 15 8999

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2017/157977 A1 (KONINKLIJKE PHILIPS NV [NL]) 21 September 2017 (2017-09-21) * page 7, line 31 - page 10, line 25; figures 3,4 * | 1-16 | INV. H04N9/68 H04N5/20 G06T5/92 |
| A,D | EP 3 394 850 B1 (KONINKLIJKE PHILIPS NV [NL]) 13 May 2020 (2020-05-13) * paragraph [0098] - paragraph [0238]; figures 1-44 * | 1-16 | |
| A | US 2007/222728 A1 (KOYAMA FUMIO [JP] ET AL) 27 September 2007 (2007-09-27) * paragraph [0035] - paragraph [0061]; figures 2,3,5 * | 1-16 | |
| A | US 2019/089956 A1 (STESSEN JEROEN HUBERT CHRISTOFFEL JACOBUS [NL]) 21 March 2019 (2019-03-21) * paragraph [0079] - paragraph [0083]; figures 5-8 * | 1-16 | |

**TECHNICAL FIELDS SEARCHED (IPC)**

H04N
G06T

The present search report has been drawn up for all claims

| Place of search | Date of completion of the search | Examiner |
|---|---|---|
| Munich | 28 June 2024 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 8999

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2024

| Patent document cited in search report | Publication date | Patent family member(s) | | Publication date |
|---|---|---|---|---|
| WO 2017157977 A1 | 21-09-2017 | BR 112018068603 A2 | | 05-02-2019 |
| | | CN 109219961 A | | 15-01-2019 |
| | | EP 3430806 A1 | | 23-01-2019 |
| | | WO 2017157977 A1 | | 21-09-2017 |
| EP 3394850 B1 | 13-05-2020 | BR 112018012456 A2 | | 11-12-2018 |
| | | CN 108431886 A | | 21-08-2018 |
| | | EP 3394850 A1 | | 31-10-2018 |
| | | ES 2808177 T3 | | 25-02-2021 |
| | | JP 6871945 B2 | | 19-05-2021 |
| | | JP 2019502221 A | | 24-01-2019 |
| | | PT 3394850 T | | 14-08-2020 |
| | | RU 2018126764 A | | 23-01-2020 |
| | | US 2019052908 A1 | | 14-02-2019 |
| | | WO 2017108906 A1 | | 29-06-2017 |
| | | ZA 201804899 B | | 27-05-2020 |
| US 2007222728 A1 | 27-09-2007 | CN 101043634 A | | 26-09-2007 |
| | | JP 2007259242 A | | 04-10-2007 |
| | | US 2007222728 A1 | | 27-09-2007 |
| US 2019089956 A1 | 21-03-2019 | CN 108781290 A | | 09-11-2018 |
| | | EP 3427478 A1 | | 16-01-2019 |
| | | US 2019089956 A1 | | 21-03-2019 |
| | | WO 2017153376 A1 | | 14-09-2017 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017157977 A
- WO 2017108906 A